# EUROPÄISCHE PATENTSCHRIFT

(11) **EP 3 811 174 B1**
(45) Veröffentlichungstag und Bekanntmachung des Hinweises auf die Patenterteilung: **11.11.2026**
(21) Anmeldenummer: 19733389.1
(22) Anmeldetag: 05.06.2019
(51) Int. Cl.: G05D 1/00

(54) **AUTONOMER MOBILER ROBOTER UND VERFAHREN ZUM STEUERN EINES AUTONOMEN MOBILEN ROBOTERS**
AUTONOMOUS MOBILE ROBOT AND METHOD FOR CONTROLLING AN AUTONOMOUS MOBILE ROBOT
ROBOT MOBILE AUTONOME ET PROCÉDÉ DE COMMANDE D'UN ROBOT MOBILE AUTONOME

(30) Priorität: 20.06.2018 DE 102018114892
(43) Veröffentlichungstag der Anmeldung: 28.04.2021
(73) Patentinhaber: Papst Licensing GmbH & Co. KG, 78112 St. Georgen (DE)
(72) Erfinder: ALEXANDROV, Vladimir, 4020 Linz (AT); MASCHER, Erwin, 4020 Linz (AT); ARTES, Harold, 4020 Linz (AT)
(74) Vertreter: HKW Intellectual Property PartG mbB
(86) Internationale Anmeldenummer: PCT/AT2019/060186
(87) Internationale Veröffentlichungsnummer: WO 2019/241811

(56) Entgegenhaltungen:
- EP-A1- 2 498 158
- EP-A2- 2 515 196
- US-A1- 2005 171 644

## Beschreibung

### TECHNISCHES GEBIET

Die hier beschriebenen Ausführungsbeispiele betreffen einen autonomen mobilen Serviceroboter wie z.B. einen Roboter zur Bearbeitung einer Oberfläche (z.B. Reinigung von Böden), zum Transport von Gegenständen oder zur Überwachung und Inspektion eines Gebiets, sowie ein Verfahren zum Steuern eines solchen autonomen mobilen Roboters.

### HINTERGRUND

In den letzten Jahren finden autonome mobile Roboter, insbesondere Serviceroboter, zunehmend Verwendung in privaten Haushalten wie auch im beruflichen Umfeld. Beispielsweise können autonome mobile Roboter eingesetzt werden zur Reinigung von Bodenflächen, zur Überwachung von Gebäuden, zur Ermöglichung einer standort- und tätigkeitsunabhängigen Kommunikation oder zum Transport von Gegenständen.

Hierbei werden zunehmend Roboter und Systeme eingesetzt, die eine Karte der Umgebung zur gezielten Navigation unter Verwendung eines SLAM-Algorithmus (engl.: *Simultaneous Localization and Mapping, deutsch: simultane Lokalisierung und Kartenerstellung, siehe z.* B. H. Durrant-Whyte and T. Bailey: "Simultaneous Localization and Mapping (SLAM): Part I The Essential Algorithms ", in: IEEE Robotics and Automation Magazine, Bd. 13, Nr. 2, S. 99-110, Juni 2006*)* erstellen. Die verwendeten Algorithmen zur Steuerung und Kontrolle des Roboters können hierbei im Hinblick auf die verwendeten Sensoren und Aktoren als auch die spezifische Form des Roboters hochoptimiert sein. Dies hat den Nachteil, dass die Wiederverwendung der implementierten Software nur mit umfangreichen Anpassungsentwicklungen möglich ist. In einem alternativen Ansatz werden verschieden Abstraktionsebenen in der Software eingebaut, um verschiedenste Hardwarekonfigurationen zu unterstützen. Diese Lösungen sind häufig rechenintensiver und benötigen somit eine teurere Hardware.

Mit dem Anspruch immer intelligentere Systeme zu entwickeln und zu vermarkten, steigt auch die Komplexität der in autonomen mobilen Robotern verwendeten Verhaltensroutinen ständig an. Eine steigende Komplexität ist jedoch zumeist, wie bei vielen komplexen Softwareapplikationen, mit einer erhöhten Fehleranfälligkeit verbunden. Dies bedeutet, dass der Roboter zwar über Sensoren zur Erkennung einer Gefahrensituation verfügt, jedoch die Navigations- und Steuersoftware beispielsweise aufgrund von Störungen, unerkannten Programmierfehlern oder ungewollter Beeinflussung von außen, nicht angemessen auf die erkannte Gefahrensituation reagiert. Ein Nachweis darüber, dass ein Roboter in allen denkbaren Gefahrensituationen angemessen und richtig reagiert, ist bei zunehmender Komplexität der Navigations- und Steuersoftware mit erheblichem Aufwand verbunden. Ein solcher Nachweis über die funktionale Sicherheit kann bei bestimmten Anwendungen aufgrund gesetzlicher Bestimmungen erforderlich sein. Die Anforderungen an die funktionale Sicherheit ist auch Gegenstand verschiedener Normen (z.B. EN/IEC 61508 und EN/IEC 62061).

Die Publikation EP 2 515 196 A2 offenbart einen Roboter mit einer Antriebseinheit, einer Sensoranordnung, welche Positionsinformationen des Roboters liefert, einer Sensoreinheit zur Detektion von Hindernissen, sowie einen zentralen Kontroller.

Die der Erfindung zugrunde liegende Aufgabe kann folglich unter anderem darin gesehen werden, einen autonomen mobilen Roboter mit einer kostengünstigen, wiederverwendbaren Navigationslösung und einem robusten Sicherheitsmechanismus und ein entsprechendes Steuerverfahren für einen autonomen, mobilen Roboter bereitzustellen.

### ZUSAMMENFASSUNG

Die oben genannte Aufgabe wird durch einen autonomen mobilen Roboter gemäß Anspruch 1 sowie durch ein Verfahren gemäß Anspruch 11 gelöst. Verschiedene Ausführungsbeispiele und Weiterentwicklungen sind Gegenstand der abhängigen Ansprüche.

Im Folgenden wird ein autonomer mobiler Roboter beschrieben. Gemäß einem Ausführungsbeispiel weist der Roboter eine Antriebseinheit, welche dazu ausgebildet ist, Steuersignale zu empfangen und den Roboter nach Maßgabe der Steuersignale zu bewegen, einen Navigationssensor zum Erfassen von Informationen über die Umgebung des Roboters, mit denen sich der Roboter orientieren kann, und eine mit dem Navigationssensor gekoppelte Navigationseinheit auf. Die Navigationseinheit ist dazu ausgebildet, Informationen von dem Navigationssensor zu empfangen und eine Bewegung für den Roboter zu planen. Der Roboter weist weiter eine Steuereinheit auf, die dazu ausgebildet ist, Bewegungsinformationen, welche die von der Navigationseinheit geplante Bewegung repräsentieren, zu empfangen und basierend auf den Bewegungsinformationen die Steuersignale zu erzeugen. Der Roboter weist weitere Sensoren auf, die mit der Steuereinheit gekoppelt sind, sodass die Steuereinheit weitere Sensorinformationen von den weiteren Sensoren empfangen kann. Sie Steuereinheit ist dazu ausgebildet, diese weiteren Sensorinformationen vorzuverarbeiten und die vorverarbeiteten Sensorinformationen in einem vordefinierten Format der Navigationseinheit zur Verfügung zu stellen. Die Planung der Bewegung für den Roboter durch die Navigationseinheit basiert sowohl auf den Informationen von dem Navigationssensor als auch auf den von der Steuereinheit zur Verfügung gestellten, vorverarbeiteten Sensorinformationen. Die Navigationseinheit weist eine erste Recheneinheit auf, der ein erster Speicher oder Speicherbereich zugeordnet ist, und die Steuereinheit weist eine zweite Recheneinheit auf, der ein zweiter Speicher oder Speicherbereich zugeordnet ist. Die erste Recheneinheit ist außerdem dazu ausgebildet, eine Navigationssoftware auszuführen, welche eine Karte einer Umgebung des Roboters verwendet. Ein derartig strukturierter Roboter erlaubt eine vollständig funktionale Trennung von Navigationseinheit und Steuereinheit. Des Weiteren wird ein korrespondierendes Verfahren beschrieben.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen.
Figur 1 illustriert beispielhaft verschiedene autonome mobile Roboter sowie verschiedene mögliche Gefahrensituationen.
Figur 2 zeigt mittels eines Blockschaltbilds beispielhaft einen autonomen mobilen Roboter.
Figur 3 illustriert mittels eines Blockschaltbilds einen exemplarischen Aufbau einer Steuereinheit für einen autonomen mobilen Roboter und deren Schnittstellen zum Navigationsmodul und der Motorsteuerung.
Figur 4 illustriert beispielhaft eine Aufsicht auf eine Unterseite eines autonomen mobilen Roboters.

### DETAILLIERTE BESCHREIBUNG

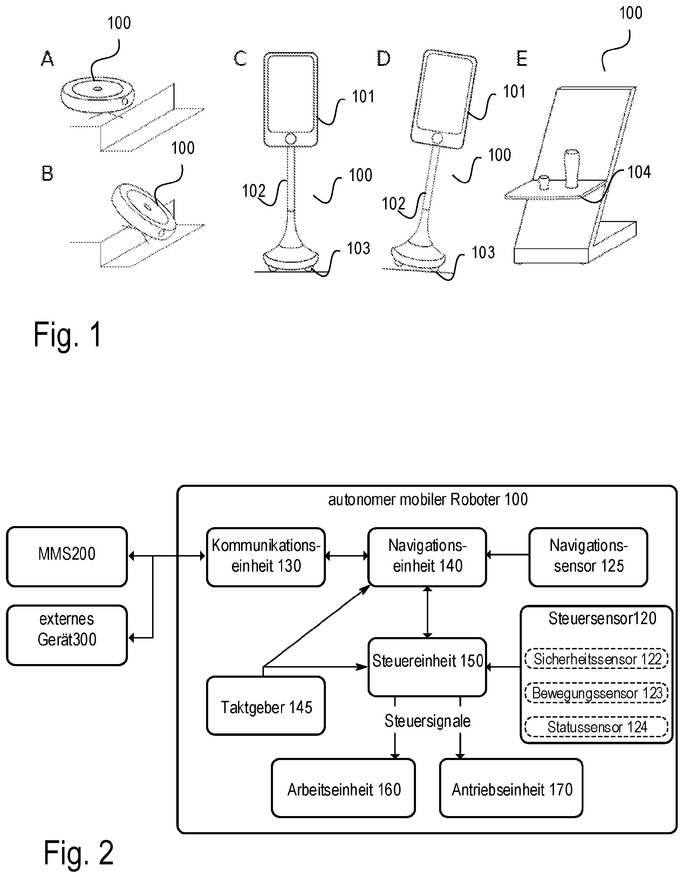

Figur 1 illustriert verschiedene Beispiele eines autonomen mobilen Roboters 100 zum autonomen verrichten von Tätigkeiten, wobei er mittels einer Karte durch seine Umgebung navigiert sowie mögliche Gefahrensituationen. Tätigkeiten im Sinne der Anmeldung gehen über die reine Navigation des Roboters in seiner Umgebung hinaus und umfassen beispielsweise eine Bodenbearbeitung, Bodenreinigung, Inspektions- und Überwachungstätigkeiten, Transportaufgaben oder Tätigkeiten zur Unterhaltung eines Nutzeres.

Figur 1A illustriert beispielsweise einen Saugroboter, der dazu ausgebildet ist, Bodenflächen zu reinigen, insbesondere zu saugen. Der Saugroboter bewegt sich dabei meist auf wenigstens drei Rädern (wobei üblicherweise Zwei angetrieben sind) voran (in Figur 1A nicht dargestellt). Auf der Unterseite des Saugroboters finden sich zudem meist rotierende Bürsten und/oder eine Saugeinheit oder Ähnliches, um Schmutz aufzusammeln während sich der Roboter 100 über die Bodenfläche bewegt. Bei einem Sturz über einer Absturzkante, wie beispielsweise einer Stufe einer Treppe, wie in Figur 1B dargestellt, kann der Saugroboter beschädigt werden. Zudem kann auch ein Schaden an der Bodenfläche, an in der Nähe befindlichen Gegenständen oder an Menschen entstehen, wenn der Roboter 100 darauf fällt oder dagegen stößt. Einige autonome mobile Roboter 100 weisen daher Bodenabstandssensoren *(floor clearance sensors)* auf (in Figur 1 nicht dargestellt), welche eine Absturzkante, wie z.B. eine Treppenstufe, rechtzeitig erkennen können um Abstürze zu vermeiden. Bodenabstandssensoren werden auch als Bodendetektionssensoren (*floor detection sensors)* oder kurz als Bodensensoren *(floor sensors)* bezeichnet.

Figur 1C zeigt beispielhaft einen Telepräsenz-Roboter. Ein Telepräsenz-Roboter weist in der Regel ein Interface 101 (Benutzerschnittstelle, auch *Human-Machine-Interface,* HMI), wie beispielsweise ein Display, Smartphone, Tablet, o.ä. auf. Dieses Interface 101 ist an einem oberen Ende eines senkrechten Armes 102 des Roboters 100 befestigt. Am unteren Ende des senkrechten Armes 102 ist ein Roboterkörper befestigt, welcher ein Antriebsmodul 103 aufweist. Aufgrund der schmalen Bauform des Roboters 100 sowie dem am oberen Ende des senkrechten Armes 102 befestigten Interface 101, weist ein solcher Telepräsenz-Roboter einen relativ hohen Schwerpunkt auf. Grundsätzlich balanciert sich der Roboter selbst aus. Beispielsweise bei einer Bewegung über stark geneigte Flächen kann der Roboter 100 jedoch leicht kippen, wodurch das Gerät beschädigt werden kann. Auch bei zu starker Beschleunigung oder beim Überfahren von Schwellen oder Stufen kann es zu einem Kippen des Roboters 100 kommen. Auch die umgebende Bodenfläche, in der Nähe befindliche Gegenstände oder Menschen können beschädigt werden, wenn der Roboter kippt 100 oder umfällt. Ein Kippen des Telepräsenz-Roboters ist beispielhaft in Figur 1D dargestellt. Telepräsenz-Roboter können daher Sensoren aufweisen (in Figur 1 nicht dargestellt), welche dazu ausgebildet sind, die Lage (insbes. die Neigung), die Beschleunigung und/oder die Winkelgeschwindigkeit des Roboters 100 zu bestimmen. Ebenso können Telepräsenz-Roboter beispielsweise Sensoren aufweisen, welche dazu ausgebildet sind, Schwellen (z.B. Türschwellen) oder Stufen zu detektieren, um das Fahrverhalten des Roboters entsprechend anpassen und somit ein Kippen des Roboters vermeiden zu können.

Figur 1E zeigt beispielhaft einen Assistenzroboter, insbesondere einen Transportroboter. Ein Transportroboter weist meist eine Transportplattform 104 auf, auf welcher zu transportierende Gegenstände, z.B. Teller oder Gläser, platziert werden können. An seiner Unterseite weist der Transportroboter beispielsweise Räder auf (in Figur 1E nicht dargestellt), mit welchen er sich fortbewegen kann. Derartige Roboter 100 können beispielsweise ältere Menschen im Alltag unterstützen und ihnen auf diese Weise ein unabhängiges Leben ermöglichen. Bei Transportrobotern ist es grundsätzlich wichtig, dass Kollisionen vermieden werden, um ein Kippen der zu transportierenden Gegenstände oder des gesamten Roboters 100 als auch Beschädigungen in der Umgebung zu vermeiden. Hierzu kann der Roboter 100 verschiedenste Sensoren aufweisen, welche (ggf. mit dazugehöriger Sensorsignalverarbeitung) dazu ausgebildet sind, stehende oder sich bewegende Objekte oder Personen im Umfeld des Roboters 100 zu detektieren (beispielsweise Laser-Range-Finder, optische Triangulationssensoren, Kameras, etc.).

Es besteht somit grundsätzlich die Möglichkeit, unter Verwendung verschiedenster Methoden und Verfahren den Roboter autonom durch sein Einsatzgebiet zu bewegen, dabei eine mögliche Gefahrensituation für autonome, mobile Roboter 100 zu erkennen und Unfälle zu vermeiden, indem auf eine erkannte Gefahrensituation angemessen reagiert wird (d.h. so dass ein Unfall vermieden oder zumindest abgemildert wird). Derartige Roboter 100 weisen üblicherweise eine Navigations- und Steuersoftware zum Steuern des autonomen mobilen Roboters 100 auf. Derartige Navigations- und Steuersoftware, die von einem Prozessor in einem Steuermodul ausgeführt wird, wird jedoch zunehmend komplexer. Durch die steigende Komplexität der Navigations- und Steuersoftware steigt das Risiko von ungewollten Programmierfehlern. Weiterhin hat eine zunehmende Zahl von autonomen mobilen Robotern 100 Zugang zum Internet. Dadurch kann der Roboter 100 beispielsweise gesteuert und kontrolliert werden, obwohl sich der Nutzer nicht in der Nähe des Roboters 100 befindet. Ebenso kann die Firmware, insbesondere die Navigations- und Steuersoftware, des Roboters 100 über das Internet aktualisiert werden. Beispielsweise können Software-Updates automatisch oder auf Aufforderung des Nutzers heruntergeladen werden. Diese Funktionalität wird auch als *Over-the-Air-Programming (OTA-Programming), OTA-Upgrading* oder *Firmware-Over-the-Air* (FOTA) bezeichnet.

Die Verbindung eines autonomen mobilen Roboters 100 mit dem Internet kann jedoch auch die Gefahr mit sich bringen, dass sich fremde Personen Zugriff auf den Roboter 100 verschaffen (z.B. so genanntes Hacken, Cracken oder *Jailbreaking* des Roboters) und diesen derart beeinflussen, dass dieser in Gefahrensituationen nicht mehr richtig reagiert, wodurch Unfälle entstehen können. Die gesamte Navigations- und Steuersoftware kann im Roboter 100 selbst, bzw. auf einem im Roboter angeordneten Speichermedium gespeichert sein. Es ist jedoch auch möglich, einen Teil der Navigations- und Steuersoftware auf externen Geräten, z.B. Cloud-Servern, zu speichern. Sind Teile der Navigations- und Steuersoftware auf externen Geräten gespeichert, dann sind Teile des Roboters 100 in der Regel nicht mehr echtzeitfähig. Es sind Roboter 100 bekannt, deren Navigations- und Steuersoftware-Algorithmen nicht-deterministische Monte-Carlo-Methoden oder Methoden des maschinellen Lernens, z.B. Deep-Learning (auch *Deep Machine Learning),* verwenden. Als Monte-Carlo-Algorithmen werden randomisierte Algorithmen bezeichnet, die mit einer nach oben beschränkten Wahrscheinlichkeit ein falsches Ergebnis liefern dürfen. Im Vergleich zu deterministischen Algorithmen sind Monte-Carlo-Algorithmen meist effizienter. Deep-Learning bezeichnet in der Regel eine Klasse von Optimierungsmethoden von künstlichen neuronalen Netzen, welche zahlreiche Zwischenlagen *(hidden layers)* zwischen Eingabeschicht und Ausgabeschicht aufweisen und dadurch eine umfangreiche innere Struktur aufweisen. Sowohl bei Monte-Carlo-Algorithmen als auch beim maschinellen Lernen sind Ursache-Wirkung-Zusammenhänge nicht a priori festgelegt und somit schwer nachvollziehbar. Dadurch ist es sehr schwer, eine sichere Funktionsweise des Roboters 100 nachzuweisen und zu garantieren, dass die Navigations- und Steuersoftware des Roboters 100 in einer beliebigen Gefahrensituation richtig und rechtzeitig reagiert, um einen Unfall zu vermeiden. Gleichzeitig ist die Verwendung derartiger neuer Robotersteuerverfahren notwendig, um autonome mobile Roboter 100 intelligenter zu machen. Eine verbesserte "Intelligenz" des Roboters ermöglicht es, dass sich der Roboter 100 leichter in das Leben des jeweiligen Nutzers und in seine jeweilige Umgebung einfügt.

Es kann also wichtig oder notwendig sein, ein nachweisbar sicheres Roboterverhalten zu ermöglichen, ohne dabei jedoch die Intelligenz des Roboters 100 einzuschränken. Gemäß einem Ausführungsbeispiel weist ein autonomer mobiler Roboter 100 zusätzlich zu der Navigationseinheit, welches die Weg- und Arbeitsplanung mit Hilfe der erwähnten Navigationssoftware ausgeführt, ein Sicherheitsmodul *(safety module)* auf, das auch als Risikoerkennungsmodul *(risk detection module)* bezeichnet werden kann. In den hier beschriebenen Beispielen arbeitet das Sicherheitsmodul funktional unabhängig von der Navigationseinheit. Grundsätzlich ist das Sicherheitsmodul dazu ausgebildet, das Roboterverhalten unabhängig von dem Navigationseinheit zu überwachen und Gefahrensituationen zu erkennen. Wenn das Verhalten des Roboters in einer erkannten Gefahrensituation als falsch, gefährlich oder unangemessen eingestuft wird, kann das Sicherheitsmodul geeignete Gegenmaßnahmen (Sicherheitsmaßnahmen) einleiten. Gegenmaßnahmen können beispielsweise darin bestehen, den Roboter 100 anzuhalten oder eine Fahrtrichtung des Roboters 100 zu ändern. Hierbei wird ausgenutzt, dass es in der Regel leichter ist, zu bestimmen, welche Bewegung nicht ausgeführt werden darf, weil sie unsicher ist, als die richtige Bewegung zu bestimmen.

Autonome mobile Roboter erledigen zunehmend Serviceleistungen im privaten und geschäftlichen Umfeld. Eine der grundlegenden Funktionen ist hierbei das Erstellen einer Karte der Umgebung mittels geeigneter Sensoren und die autonome Navigation mit Hilfe dieser Karte. Ein grundlegendes Problem der Weiterentwicklung der Robotik ist die starke Verknüpfung der verwendeten Software und Algorithmen mit der zugrundeliegenden Hardware wie insbesondere den Motoren des Antriebs oder sonstiger zur Tätigkeit nötigen Arbeitseinheiten und den im Roboter verbauten Sensoren. Eine Wiederverwertung der Software bei der Konstruktion neuer Roboter wird durch die erwähnte starke Verknüpfung erschwert.

Es gibt hierbei zwei bekannte Ansätze zur Lösung dieses Problems. Zum einen kann eine mobile Plattform zur Verfügung gestellt werden, die alle Anforderungen an die Mobilität eines Roboters bereitstellt. Neue Anwendungen müssen auf diese Plattform aufgesetzt werden, wodurch dieser Ansatz unflexibel ist. Ein anderer Ansatz ist eine starke Modularisierung der Software, wobei hardwareabhängige und hardwareunabhängige Module getrennt werden. Dies erfordert Teils starke Abstraktion der Hardware, was sich in der Regel negativ auf die Leistungsfähigkeit des Systems auswirkt.

Im Unterschied hierzu strebt der gemäß einem Ausführungsbeispiel verfolgte Ansatz eine funktionale Trennung von spezifischer Hardware und den zugehörigen Algorithmen an. Dies kann mit der zuvor beschriebenen Trennung der Navigationseinheit und einem Sicherheitsmodul kombiniert werden.

Fig. 2 illustriert anhand eines Blockschaltbildes eine exemplarische Struktur eines autonomen mobilen Roboters 100, der mehrere funktional getrennte Einheiten aufweist. Generell kann dabei eine Einheit eine eigenständige Baugruppe (Hardware) sein, eine Komponente einer Software zur Steuerung des Roboters 100, welche eine gewünschte Aufgabe *(task)* in einem bestimmten Robotereinsatzgebiet ausführt, oder eine Kombination von beidem (z.B. dedizierte Hardware mit angeschlossenen Peripheriekomponenten und geeigneter Soft- und/oder Firmware).

Im vorliegenden Beispiel weist der autonome mobile Roboter 100 eine Antriebseinheit 170 auf, welche beispielsweise Elektromotoren, Getriebe und Räder aufweisen kann. Mit Hilfe der Antriebseinheit 170 kann der Roboter 100 - theoretisch - jeden Punkt seines Einsatzgebiets anfahren. Der Roboter 100 kann des Weiteren eine Arbeitseinheit 160 (Prozesseinheit) aufweisen, die einen bestimmten Prozess wie z.B. die Reinigung einer Bodenfläche oder den Transport von Gegenständen durchführt. Die Arbeitseinheit 160 kann beispielsweise eine Reinigungseinheit zur Reinigung einer Bodenfläche (z.B. Bürste, Staubsaugvorrichtung) sein, eine als Tablett gestaltete höhenverstellbare und/oder schwenkbare Transportplattform oder ein Greifarm zum Fassen und Transportieren von Gegenständen, etc. In manchen Fällen, wie beispielsweise bei einem Telepräsenzroboter oder einem Überwachungsroboter, ist eine Arbeitseinheit 160 nicht zwangsläufig erforderlich. So besitzt ein Telepräsenzroboter meist ein mit einer Mensch-Maschine-Schnittstelle 200 gekoppelte komplexe Kommunikationseinheit 130 mit einer Multimediaeinheit bestehend aus beispielsweise Mikrofon, Kamera und Bildschirm (vgl. Fig. 1, Interface 101), um die Kommunikation zwischen mehreren räumlich weit entfernten Personen zu ermöglichen. Ein anderes Beispiel ist ein Überwachungsroboter, der auf Kontrollfahrten mit Hilfe spezialisierter Sensoren (z.B. Kamera, Bewegungsmelder, Mikrofon)bestimmte (ungewöhnliche) Ereignisse (z.B. Feuer, Licht, unautorisierte Personen, etc.) erkennen und beispielsweise eine Kontrollstelle entsprechend darüber informieren kann.

Der Roboter 100 kann des Weiteren eine Kommunikationseinheit 130 aufweisen, um eine Kommunikationsverbindung zu einer Mensch-Maschine-Schnittstelle 200 (MMS, auch *Human-Machine-Interface,* HMI) und/oder sonstigen externen Geräten 300 herzustellen. Die Kommunikationsverbindung kann beispielsweise eine direkte drahtlose Verbindung (z. B. Bluetooth), eine lokale drahtlose Netzwerkverbindung (z. B. WiFi oder Zig-Bee) oder eine Internetverbindung (z. B. zu einem Cloud-Service) sein. Beispiele für eine Mensch-Maschine-Schnittstelle 200 sind Tablet-PC, Smartphone, Smartwatch, Computer oder Smart-TV. In einigen Fällen kann die Mensch-Maschine-Schnittstelle 200 auch direkt in den Roboter 100 integriert sein und kann über Tasten, Gesten und/oder Sprachein- und -ausgabe bedient werden. Die zuvor erwähnte externe Hard- und Software kann sich auch zumindest teilweise in der Mensch-Maschine-Schnittstelle 200 befinden. Beispiele für externe Geräte 300 sind Computer und Server, auf denen Berechnungen und/oder Daten ausgelagert werden können, externe Sensoren, die zusätzliche Informationen liefern, oder andere Haushaltsgeräte (z.B. andere Roboter), mit denen der autonome mobile Roboter 100 zusammenarbeitet und/oder Informationen austauscht. Über die Kommunikationseinheit 130 können beispielsweise Informationen über den autonomen mobilen Roboter 100 zur Verfügung gestellt werden (z.B. Batteriestatus, aktueller Arbeitsauftrag, Karteninformationen, etc.) oder es können Anweisungen (z.B. Nutzerkommandos), z.B. betreffend eines Arbeitsauftrages des autonomen mobilen Roboters 100, entgegengenommen werden.

Gemäß dem in Figur 2 dargestellten Beispiel kann der Roboter 100 eine Navigationseinheit 140 und eine Steuereinheit 150 besitzen, welche so eingerichtet sind, dass sie Informationen austauschen. Die Steuereinheit 150 erhält hierbei von der Navigationseinheit 140 erzeugte Bewegungs- und Arbeitsinformationen. Die Bewegungsinformation sind beispielsweise geplante Wegpunkte, Wegsegmente (z.B. Kreisbögen) oder Geschwindigkeitsinformationen. Wegpunkte können beispielsweise bezüglich der aktuellen Roboterpose (Pose bezeichnet die Position und Orientierung) angegeben werden. Für ein Wegsegment kann beispielsweise die zurückzulegende Distanz und ein Drehwinkel angegeben werden (Distanz von Null erzeugt eine Drehung auf der Stelle, Drehwinkel Null erzeugt eine gerade Bewegung). Als Geschwindigkeitsinformation kann beispielsweise die Translationsgeschwindigkeit und die Winkelgeschwindigkeit, die für eine vorgebbare Zeit gefahren wird, genutzt werden. Die Navigationseinheit 140 plant also eine konkrete Bewegung voraus (z.B. ein bestimmtes Wegsegment) und teilt diese (als Bewegungsinformation) der Steuereinheit 150 mit. Die Steuereinheit 150 ist dazu eingerichtet aus den Bewegungsinformationen die Steuersignale für die Antriebseinheit 170 zu erzeugen. Diese Steuersignale können alle Signale sein, die geeignet sind die Aktoren (insbesondere die Motoren) des Antriebs anzusteuern. Beispielsweise können dies die Anzahl der nötigen Umdrehungen eines rechten und linken Rades eines Differentialantriebs sein. Alternativ können die Motoren direkt über die Änderung der Spannung und/oder Stromstärke angesteuert werden. Prinzipiell muss für die Erzeugung der Steuersignale aus den von der Navigationseinheit 140 erhaltenen Bewegungsinformationen die konkrete Hardwarekonfiguration (Art und Position der Aktoren) des Roboters bekannt sein, wohingegen die Bewegungsinformationen auf einem abstrakteren Level weitgehend unabhängig von der verwendeten Hardware ermittelt werden. Somit sind bei einer Änderung der Antriebseinheit 160 die nötigen Anpassungsentwicklungen auf die Steuereinheit 150 beschränkt.

Analog zu den Bewegungsinformationen können die Arbeitsinformationen in Steuersignale für die Arbeitseinheit 160 umgewandelt werden. Arbeitsinformationen können hierbei beispielsweise beschreiben, ob und mit welcher Leistung eine Arbeitseinheit aktiv ist. So kann die Arbeitseinheit 160 eine Reinigungseinheit mit rotierenden Bürsten und Saugeinheit sein. Die Arbeitsinformation beinhaltet, ob die Reinigungseinheit gerade aktiv ist, und mit welcher Stärke sie arbeiten soll. Die hieraus erzeugten Steuersignale beispielsweise direkt die Leistung der Motoren der Bürste und der Saugeinheit steuern. Die Navigationseinheit 140 verwendet bei der erwähnten Planung der Bewegung und beim Aufbau und der Aktualisierung der Karte des Robotereinsatzgebietes unter anderem Informationen, die von einem Navigationssensor 125 geliefert werden. Ein solcher Navigationssensor 125 kann z.B. ein berührungsloser optischer Sensor (z.B. ein Triangulationssensor) sein.

Zusätzlich kann die Steuereinheit 150 Informationen von Steuersensoren 120 sammeln, die für den Roboter spezifische Sensorinformationen erfassen. Dies umfasst beispielsweise Sicherheitssensoren 122 zum Erfassen sicherheitskritischer Situationen in der unmittelbaren Umgebung des Roboters. Ein Beispiel für einen Sicherheitssensor sind die zuvor erwähnten Bodenabstandssensoren zum Detektieren von Absturzkanten. Andere Sicherheitssensoren 122 können taktile Sensoren (z.B. Kontaktschalter) zum Erkennen einer Berührung eines Hindernisses oder Nahbereichssensoren (z.B. Infrarot-Sensoren) zum Erfassen von Hindernissen in der nahen Umgebung des Roboters. Hierdurch können unbeabsichtigte Kollisionen mit diesen Hindernissen rechtzeitig erkannt werden. Ein weiteres Beispiel für Steuersensoren 120 sind Bewegungssensoren 123, die zur Überwachung der vom Steuermodul 150 konkret gesteuerten Bewegung des Roboters 100 dienen, und die in der Praxis nicht exakt identisch mit der von der Navigationseinheit 140 geplanten Bewegung sein wird. Hierzu gehören beispielsweise Odometer wie beispielsweise Radencoder *(Wheel encoder),* Beschleunigungssensoren und Gyroskope (beispielsweise in einer inertialen Messeinheit *(inertial measurement unit,* IMU) zusammengefasst). Ein weiteres Bespiel für Steuersensoren 120 sind Lagesensoren zur Bestimmung der Neigung des Roboters 100 und deren Änderung. Ein weiteres Beispiel für Steuersensoren 120 sind Statussensoren 124 zur Erfassung des Status (Zustands) des von Teilen des Roboters. Hierzu gehören beispielsweise Strom- und Spannungsmesser mit denen die Leistungsaufnahme beispielsweise der Antriebseinheit bestimmt wird. Andere Statussensoren können Schalter umfassen, wie beispielsweise Radkontaktschalter zum Bestimmen, ob der Roboter Kontakt zu einer Bodenfläche hat, oder Schalter, die die An- bzw. Abwesenheit von Komponenten wie einer Bürste oder eines Schmutzbehälters anzeigen.

Die Messwerte der Steuersensoren 120 werden von der Steuereinheit 150 erfasst und ausgewertet. Die Ergebnisse können in einer standardisierten Form an die Navigationseinheit 140 weitergegeben werden. Dies kann in regelmäßigen Abständen, in periodischen Abständen, oder nach einer Anforderung durch die Navigationseinheit 140 geschehen. Die Art der Information ist abhängig vom Sensor und kann auf ein für den Sensor typisches Sensormodell abgebildet werden. Beispielsweise können die Odometriedaten bei einem Differentialantrieb Bruchteile einer Radumdrehung (Radencoder) beschreiben. Hieraus kann bestimmt werden, welche Strecke das zum Encoder gehörige Rad zurückgelegt hat. Aus der Kombination beider Räder des Differentialantriebs als auch deren Position ergibt sich die zurückgelegte Wegstrecke und die Orientierungsänderung. Die an das Navigationsmodul 140 weitergegebene Odometrieinformation beschreibt die Änderung der Position und Orientierung des Roboters seit der letzten Information. Beispielsweise kann mit einem Bodenabstandssensor eine Absturzkante bestimmt werden, wobei zahlreiche Messprinzipien möglich sind. Die Steuereinheit 150 bestimmt aus den Rohdaten des Bodenabstanddssensoren, ob einer der Sensoren eine Absturzkante detektiert. An die Navigationseinheit 140 kann die Position einer detektierten Absturzkante in Form der Position des auslösenden Bodenabstandssensors relativ zu einem festen Koordinatensystems des Roboters (z.B. ausgehend vom kinematischer Mittelpunkt des Differentialantriebs) gesendet werden. Alternativ kann eine dem Sensor zugeordnete Nummer (ID) an die Navigationseinheit 140 gesandt werden. In der Navigationseinheit 140 kann aus dieser Nummer (ID) die zu dem auslösenden Bodenabstandssensor gehörende Position aus zuvor festgelegten Parametern bestimmt werden. Die zugehörigen Parameter (Nummer und Position des Sensors) können beispielsweise bei einer Initialisierung der Navigationseinheit geladen werden. Hierdurch wird Datenverkehr reduziert und Berechnungen auf einen potentiell leistungsstärkeren Prozessor der Navigationseinheit verlagert. Die von den Steuersensoren 120 gelieferten Informationen werden somit in abstrahierter und von konkreten Sensoren unabhängiger Form an die Navigationseinheit 140 weitergegeben.

Weitere Beispiele solcher Sensoren sind taktile Sensoren zum Erfassen von Berührungen mit Hindernissen (z.B. Kollision). Die entsprechende Information über eine detektierte Berührung kann (analog wie bei detektierten Absturzkanten) bei einem detektierten Ereignis mit der Position oder Nummer (ID) des auslösenden Sensors übertragen werden. Sensoren zum Vermeiden von Kollisionen können in einem Nahbereich Hindernisse kontaktlos detektieren. Hierfür werden beispielsweise Infrarot-Sensoren verwendet, die ein Infrarot-Signal aussenden. Aus dessen Reflexion kann auf das Vorhandensein und den Abstand eines Hindernisses geschlossen werden. Für diese Sensoren kann zusätzlich zur Sensorposition beispielsweise der Abstand in dem sicher kein Hindernis ist an die Navigationseinheit gesendet werden.

Gemäß dem in Figur 2 dargestellten Beispiel erhält die Navigationseinheit 140 neben den Sensorinformationen der Steuereinheit 150 zusätzlich unmittelbare Sensormessungen eines oder mehrerer Navigationssensoren 125, welcher Informationen über die Umgebung des Roboters liefert, mit denen sich der Roboter orientieren kann. Dies bedeutet, dass mit dem (den) Sensor(en) 125 die Position von Navigationsfeatures bestimmt werden können, die zum Aufbau einer Karte geeignet sind. Solch ein Navigationssensor 125 ist beispielsweise ein Sensor zum berührungslosen Messen von Abständen zu Objekten über größere Entfernungen wie insbesondere Laserabstandsmesser *(Laser-Distance-Sensor)* oder 3D-Kameras, welche Abstände mittels Triangulation oder Laufzeitmessung bestimmen. Diese Sensoren liefern Informationen über die Position von Hindernissen, die in einer Karte verzeichnet werden können. Zusätzlich oder alternativ kann der Navigationssensor 125 eine Kamera sein, die Bilder der Umgebung des Roboters liefert. Die Bilder können unmittelbar als Navigationsfeatures dienen. Alternativ oder zusätzlich können mittels Objekterkennung und Bildverarbeitung charakteristische Merkmale wie Ecken und Kanten in den Umgebungsbildern erkannt werden, die als Navigationsfeatures dienen. Insbesondere durch die Kombination der Odometrieinformation von der Steuereinheit 150 und den Navigationsfeatures kann mittels an sich bekannten SLAM-Algorithmen eine Karte der Umgebung aufgebaut, die Position des Roboters in der Karte bestimmt und für die Navigation und Arbeitsplanung genutzt werden. Eine solche Karte kann temporär (also bei jedem Einsatz neu) aufgebaut oder für eine wiederholte Nutzung gespeichert und bei Bedarf neu geladen werden. Der Vorteil dieser Lösung ist eine enge Integration des Navigationssensors und den hiermit verbundenen Algorithmen. Die Kombination aus Navigationseinheit 140 und Navigationssensor 125 kann hierdurch relativ leicht in neue Roboteranwendungen integriert werden. Voraussetzung ist nur eine Steuereinheit150 mit der spezifizierten Schnittstelle zum Austausch der Daten in der erwähnten standardisierten Form (standardisiertes Format). Zusätzlich müssen einige Parameter wie die Position und Orientierung des Navigationssensors 125 im Roboter vorgegeben und/oder bestimmt (z.B. mittels Kalibrierung) werden.

Neben dem Sensor zur Erfassung der Umgebung können weitere für die Navigation wesentliche Sensoren eng mit der Navigationseinheit verbunden sein und dessen Signale direkt von dieser ausgewertet werden. Ein Beispiel hierfür ist eine inertialle Messeinheit (IMU) zur Bestimmung von Beschleunigungen und Winkelgeschwindigkeiten. Diese kann genutzt werden, um die Konsistenz der von der Steuereinheit erhaltenen Odometrieinformation zu bestimmen und so die Positionsbestimmung des Roboters in der Karte zu verbessern. Insbesondere kann die IMU genutzt werden, um Beschleunigungen abweichend von der geplanten Bewegung zu detektieren, wie sie beispielsweise bei einem Durchdrehen der Räder entstehen. Zudem kann die Lage des Roboters relativ zur Erdbeschleunigung bestimmt werden. Dies kann für die Interpretation der Umgebungsinformation und die Bestimmung der Messrichtung des Navigationssensors genutzt werden.

Die Navigationseinheit 140 kann beispielsweise mit einer Hindernisvermeidungsstrategie *(sense and avoid strategy)* und/oder einem SLAM-Algorithmus *(Simultaneous Localization and Mapping,* simultane Lokalisierung und Kartenerstellung) und/oder mit einer oder mehreren Karten des Robotereinsatzgebiets arbeiten. Solche Karte(n) des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder Menschen zur Verfügung gestellt werden. Die Navigation und Arbeitsplanung der Navigationseinheit 140 umfasst beispielsweise das Erstellen von Zielpunkten, die Planung eines Weges zwischen den Zielpunkten und das Festlegen der Aktivität der Arbeitseinheit 160 auf dem Weg zum Ziel oder am Ziel. Zusätzlich kann die Navigationseinheit 140 einen Kalender *(Scheduler)* verwalten, in welchem vorausgeplante Aktivitäten eingetragen sind. So kann ein Nutzer beispielsweise eintragen, dass ein Reinigungsroboter täglich zu einer festen Uhrzeit eine Reinigung beginnt.

Wie in dem Ausführungsbeispiel von Fig. 2 dargestellt, kann das System aus Kommunikationseinheit 130, Navigationseinheit 140 und Steuereinheit 150 so eingerichtet sein, dass ein Informationsaustausch nur zwischen jeweils der Kommunikationseinheit 130 und der Navigationseinheit 140 als auch der Navigationseinheit 140 und der Steuereinheit 150 stattfindet. Dies ist insbesondere sinnvoll, wenn eine schnelle datenintensive Kommunikation über die Kommunikationseinheit 130 abgewickelt wird. Des Weiteren wird der Datenfluss hierdurch vereinfacht.

Wie später noch detaillierter erläutert, sind die Navigationseinheit 140 samt Navigationssensor 125 funktional unabhängig von der Steuereinheit 150, welche die von den Steuersensoren 120 gelieferten Sensoren verarbeitet. Die zwischen der Navigationseinheit 140 und der Steuereinheit 150 ausgetauschten Daten/Informationen werden in einem definierten Format übertragen, welches unabhängig von der verwendeten Sensorhardware ist. Wenn in einem Nachfolgemodell des Roboters 100 ein anderer Navigationssensor 125 verwendet werden soll, muss nur die Software (und ggf. auch einige Hardwarekomponenten) der Navigationseinheit 140 an den neuen Navigationssensor angepasst werden, während diese Änderung keinen Einfluss auf die Steuereinheit 150 hat. Gleichermaßen muss nur die Software (insbesondere Treiber und ggf. auch einige Hardwarekomponenten) der Steuereinheit 150 angepasst werden, wenn in einem Nachfolgemodell des Roboters 100 andere oder zusätzliche Steuersensoren 120 oder eine andere Antriebseinheit 170 oder eine andere Arbeitseinheit 160 verwendet werden sollen. Die Navigationseinheit 140 und der verwendete Navigationssensor 125 wird damit funktional vollständig von der Steuereinheit 150 und der an die Steuereinheit angeschlossene Hardware (Steuersensoren 120, Arbeitseinheit 160, Antriebseinheit 170) entkoppelt. Sowohl die Steuereinheit 150 als auch die Navigationseinheit 140 können wie erwähnt zumindest teilweise mittels Software realisiert sein, die allerdings unabhängig voneinander auf verschiedenen Prozessoren (Recheneinheiten) oder Prozessorkernen ausgeführt werden kann. Des Weiteren können den verschiedenen Prozessoren oder Prozessorkernen separate Speicherbausteine oder getrennte (z.B. geschützte) Speicherbereiche eines Speichers zugeordnet sein, sodass die Software der Steuereinheit 150 und die Software der Navigationseinheit 140 unabhängig voneinander ausgeführt werden können.

Durch die getrennte Verarbeitung von Sensorinformationen und sonstigen Ereignissen (z.B. Nutzereingabe) durch Steuereinheit 150 und Navigationseinheit 140 ist eine zeitliche Zuordnung nicht ohne weiteres möglich. Um die Datenverarbeitung und somit die Navigation, die Pfad- und Arbeitsplanung zu vereinfachen, kann jeder Messung und jedem detektierten Ereignis ein Zeitstempel zugeordnet werden. Dieser sollte zumindest von der Navigationseinheit 140 eindeutig interpretierbar sein. Hierfür ist es notwendig, dass sowohl die Steuereinheit 150, als auch die Navigationseinheit über einen Taktgeber 145 synchrone Uhren verwenden. Der Taktgeber kann eine Systemuhr sein, welche beispielsweise in regelmäßigen Abständen ein Zeitsignal ausgibt, das sowohl vom Navigationseinheit 140 als auch von der Steuereinheit 150 empfangen wird. Alternativ können Taktgeber in den Recheneinheiten der Navigationseinheit 140 oder der Steuereinheit 150 genutzt werden.

Beispielsweise kann ein Taktgeber in der Navigationseinheit 140 genutzt werden. Basierend auf diesem Takt legt die Navigationseinheit 140 die intern zu vergebenden Zeitstempel fest. In periodischen Abständen (z.B. jede Sekunde) wird von dem Taktgeber 145 ein Taktsignal an die Steuereinheit 150 gesendet. Dieses Taktsignal wird genutzt um einen internen Taktgeber der Steuereinheit 150 synchron mit dem in der Navigationseinheit verwendeten Taktgeber zu halten. Hierdurch kann die Steuereinheit 150 den Sensorinformationen und anderen detektierten Ereignissen einen Zeitstempel zuordnen, der synchron zum Zeitstempel der Navigationseinheit 140 ist. Beispielsweise bestimmt die Steuereinheit 150 Odometrieinformationen basierend auf Messungen eines Odometer. Diese werden mit einem Zeitstempel versehen und an die Navigationseinheit 140 gesandt. Die Navigationseinheit 140 erhält Sensorinformationen des Navigationssensors (insbesondere Navigationsfeatures) die ebenfalls mit einem Zeitstempel versehen sind. Basierend auf den Zeitstempeln kann die Navigationseinheit 140 nun entscheiden, ob sie die benötigten Odometrieinformationen schon erhalten hat, und bei Bedarf den Erhalt einer neuen Odometrieinformation abwarten. Basierend auf den Zeitstempeln können die Messungen zeitlich geordnet und im Rahmen eines SLAM-Algorithmus zusammengeführt werden, wodurch der Zustand der Karte und die Pose des Roboters in dieser Karte aktualisiert werden.

Des Weiteren kann der autonome mobile Roboter 100 eine Energieversorgung aufweisen, wie beispielsweise eine Batterie (in Fig. 2 nicht dargestellt). Die Batterie kann beispielsweise aufgeladen werden, wenn der autonome mobile Roboter 100 an einer (in den Figuren nicht dargestellten) Basisstation angedockt ist. Die Basisstation kann beispielsweise mit dem Stromnetz verbunden sein. Der autonome mobile Roboter 100 kann dazu ausgebildet sein, die Basisstation selbstständig anzufahren, wenn ein Laden der Batterie erforderlich ist, oder wenn der Roboter 100 seine Aufgaben abgearbeitet hat.

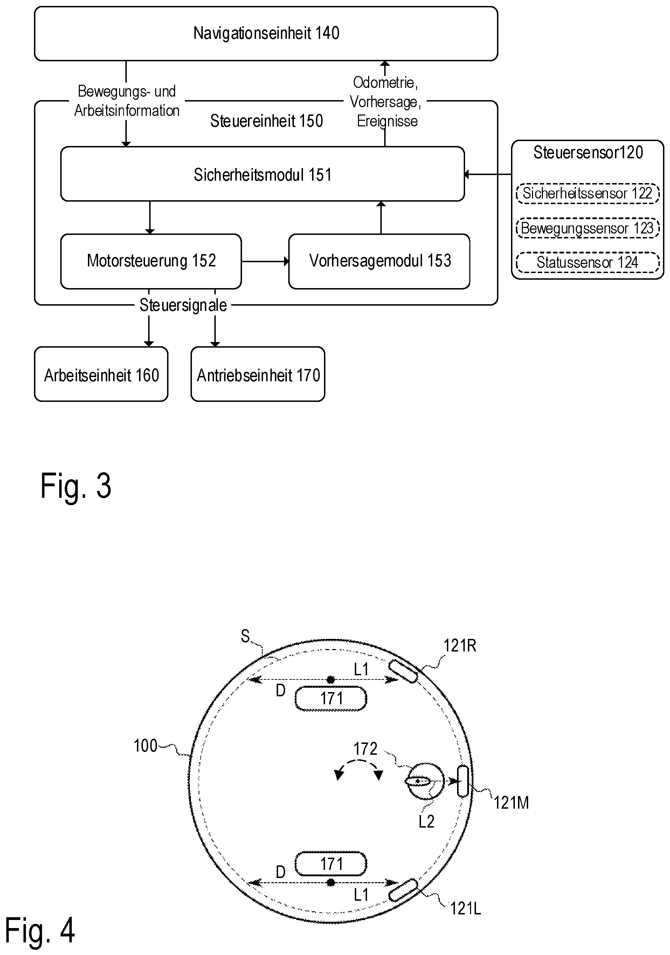

Figur 3 zeigt ein Ausführungsbeispiel der Steuereinheit 150 detallierter. Diese kann beispielsweise ein Sicherheitsmodul 151, eine Motorsteuerung 152 (Motor-Controller) und ein Vorhersagemodul 153 besitzen. Die Motorsteuerung 152 ist dazu eingerichtet aus den von der Navigationseinheit 140 erhaltenen Bewegungs- und Arbeitsinformation konkrete Signale zur Ansteuerung der Motoren und Aktoren der Antriebseinheit170 und der Arbeitseinheit 160 zu erzeugen. Hierzu kann ein Puffer aufgebaut werden, der Steuersignals für eine vorgebbare Zeitspanne zwischenspeichert. Die Bewegungsinformation kann in diesem Fall einen sofortigen Stopp des Roboters enthalten, wobei alle im Puffer enthaltenen Steuersignale gelöscht, und durch aktive Bremssteuersignale ersetzt werden können. Für die Steuerung können Informationen zu Strom und Spannungsmessung (Statussensoren 124) und auch Encoderinformationen (Bewegungssensor 123) in einer Regelschleife genutzt werden.

Bei der Erzeugung der Steuersignale können hardwarespezifische Anpassungen erforderlich sein, die zu gewissen Abweichungen zwischen der tatsächlich gesteuerten Bewegung und der ursprünglich von der Navigationseinheit 140 geplanten Bewegung führen. Auch Limitierungen (minimaler Kurvenradius, maximale Beschleunigung, beschränkte Genauigkeit der Ansteuerung etc.) der in der Antriebseinheit 170 verwendeten Antriebskomponenten (Motoren, Leistungstreiber, etc.) können zu derartigen Abweichungen führen. Aus diesem Grund kann ein Vorhersagemodul 153 basierend auf dem Puffer der Steuersignale eine zukünftige Bewegung des Roboters ermitteln. Hierbei kann ein Berechnungsmodel genutzt werden, welches die Trägheit des Roboters, die Eigenschaften der Treiberelektronik und/oder die spezifische Konstruktion der Antriebseinheit (wie beispielsweise Position und Größe der Räder) berücksichtigen kann. Das Ergebnis ist beispielsweise eine Orts- und Orientierungsänderung in einem oder mehreren vorgebbaren Zeitintervallen. Diese Vorhersage kann an die Navigationseinheit 140 übermittelt werden, damit diese bei der Navigation und Arbeitsplanung berücksichtigt werden kann.

Das Sicherheitsmodul 151 ist dazu ausgebildet, ausgewählte sicherheitsrelevante Aspekte der autonomen Bewegung des Roboters 100 selbstständig und unabhängig von der Navigationseinheit 140 zu überwachen. Das Sicherheitsmodul 151 ist weiterhin dazu ausgebildet, einzugreifen, wenn die Navigationseinheit 140 in einer Gefahrensituation nicht oder nicht angemessen reagiert. Eine nicht angemessene Reaktion ist eine Reaktion, die die Gefahrensituation nicht vermeidet oder eine andere Gefahrensituation herbeiführen könnte. Eine nicht angemessene Situation kann beispielsweise eine Reaktion sein, welche ein Kippen oder Stürzen des Roboters 100 zur Folge haben kann, wodurch ein weiterer Betrieb des Roboters 100 ohne menschliches Eingreifen nicht mehr möglich ist, oder Schäden am Roboter, an Gegenständen in der Umgebung, am Bodenbelag oder an umstehenden Personen entstehen können. Insofern kann das Sicherheitsmodul 151 die von der Navigationseinheit 140 geplante Bewegung des Roboters "filtern", d.h. verwerfen oder modifizieren.

Um die erwähnte funktionale Unabhängigkeit des Steuereinheit 150 von der Navigationseinheit 140 zu erreichen, kann die Steuerungseinheit 150 mit dem Sicherheitsmodul 151 wie erwähnt einen eigenen Prozessor sowie ein Speichermodul aufweisen. In dem Speichermodul kann eine Software zur Gefahrenerkennung gespeichert sein, welche von dem Prozessor ausgeführt werden kann. Es ist jedoch auch möglich, dass sich die Steuereinheit 150 mit dem Sicherheitsmodul 151 einen Prozessor und/oder ein Speichermodul mit einem oder mehrerer der anderen Einheiten des Roboters 100 teilt. In einem Ausführungsbeispiel kann der Steuereinheit 150 mit dem Sicherheitsmodul 151 ein Prozessorkern eines Mehrkern-Prozessors zugeordnet sein, dessen andere Prozessorkerne von anderen Einheiten des Roboters 100 (wie z.B. von der Navigationseinheit 140) benutzt werden können. Nichtdestotrotz kann die Software des Sicherheitsmoduls 150 funktional unabhängig von der Software des Steuermoduls 140 oder anderer Module arbeiten. Wenn die Steuereinheit 150 einen eigenen Prozessor und ein eigenes Speichermodul aufweist (oder einen Prozessorkern eines Mehrkern-Prozessors exklusiv nutzt), kann dies Störeinflüsse verringern, so dass leichter sichergestellt werden kann, dass das sicherheitsrelevante Sicherheitsmodul 151 der Steuereinheit 150 zuverlässig und rechtzeitig reagieren kann. Anders als das Navigationsmodul 140, das die Informationen der Steuersensoren 120 nicht notwendigerweise in Echtzeit erhält, stehen der Steuereinheit 150 und damit dem Sicherheitsmodul 150 die Sensorinformationen der Steuersensoren 120 in Echtzeit zur Verfügung, und es kann daher schnell und zuverlässig Gefahrensituationen erkennen und reagieren.

Die Software des Sicherheitsmoduls 151 zur Gefahrenerkennung kann dabei möglichst einfach gestaltet sein, um eine nachvollziehbare und somit nachweisbar zuverlässige Detektion von Gefahrensituationen und Reaktion in Gefahrensituationen zu gewährleisten. Gemäß einem Ausführungsbeispiel ist es auch möglich, dass die Steuereinheit 150 des autonomen mobilen Roboters 100 mehrere Sicherheitsmodule 151 aufweist, wobei jedes der Sicherheitsmodule 151 mit seiner entsprechenden Gefahrerkennungssoftware für eine bestimmte Gefahrensituation (z.B. die Gefahr eines unmittelbar bevorstehenden Sturzes über eine Stufe) ausgelegt und auf diese spezialisiert ist.

Eine Möglichkeit, das Ziel der Einfachheit des Sicherheitsmoduls 151 sowie der Gefahrerkennungssoftware zu erreichen (und damit eine einfachen Validierung der Funktion des Sicherheitsmoduls zu ermöglichen), besteht beispielsweise darin, verschiedene Konzepte der reaktiven und/oder verhaltensbasierten Robotik *(Reactive*/*behaviour-based robotics)* im Sicherheitsmodul 151 anzuwenden. Bei derartigen Konzepten wird beispielsweise die Handlungsweise des Roboters 100 lediglich aufgrund aktueller Sensordaten bestimmt. Im Unterschied zu solchen Konzepten ist das Sicherheitsmodul 151 jedoch dazu ausgebildet, nur in Ausnahmesituationen, z.B. wenn eine unmittelbare Gefahr erkannt wird und die Navigationseinheit 140 nicht angemessen darauf reagiert, in die geplante Bewegung des Roboters 100 einzugreifen. Hierzu kann das Sicherheitsmodul 151 von der Navigationseinheit 140 die Bewegungs- und Arbeitsinformation und auch die Vorhersage der zukünftigen Bewegung des Vorhersagemoduls 153 erhalten. Wenn die Bewegungsinformationen zu einer sicheren Bewegung führen, werden sie an die Motorsteuerung 152 weitergegeben. Im Falle einer unsicheren Bewegung können die Bewegungsinformationen vom Sicherheitsmodul 151 geändert oder verworfen werden bevor sie an die Motorsteuerung 152 weitergegeben werden. Zusätzlich oder alternativ kann das Sicherheitsmodul 151 ein Kommando für einen "Not-Stopp" an die Motorsteuerung 152 senden. Dies führt dazu, dass alle im Puffer gespeicherten Steuersignale verworfen werden, und neue Steuersignale zum aktiven Bremsen (und ggf. Zurücksetzen) des Roboters 100 erzeugt werden. Zu diesem Zweck kann das Sicherheitsmodul 151 dazu ausgebildet sein, basierend auf den von den Steuersensoren 120 gelieferten aktuellen Informationen verbotene, bzw. potentiell gefährliche Bewegungsinformationen (die von der Navigationseinheit 140 empfangen wurden) zu erkennen, welche ohne ein Eingreifen des Sicherheitsmoduls 151 zu einem Unfall führen könnten. Alternativ kann die Sicherheitsmodul 151 auch unter Umgehung des Motor-Controllers 152 direkt die Antriebseinheit ansteuern, um die Bewegung des Roboters zu bremsen. Des Weiteren kann das Sicherheitsmodul 151 auch die Stromzufuhr der Antriebseinheit oder der darin enthaltenen Motoren unterbrechen.

Beispielsweise kann das Sicherheitsmodul 151 mit einem oder mit mehreren Bodenabstandssensoren als Sicherheitssensoren 122 gekoppelt sein. Wenn ein Bodenabstandssensor einen ungewöhnlich hohen Abstand zum Boden anzeigt (z.B. weil der Roboter kurz davor ist, über eine Kante zu fahren, oder weil der Roboter hoch gehoben wurde), kann das Sicherheitsmodul 151 diese Situation als Gefahrensituation beurteilen. Wenn der betreffende Bodenabstandssensor (in Fahrtrichtung gesehen) vorne am Roboter angeordnet ist, dann kann das Sicherheitsmodul 151 die aktuelle Bewegung als potentiell gefährlich einstufen und ein Stoppen der aktuellen Bewegung veranlassen oder diese ändern (z.B. zurückfahren). In diesem Fall sind das Kriterium, das das Sicherheitsmodul 151 zur Detektion einer Gefahrensituation verwendet, und das Kriterium, das das Sicherheitsmodul 151 zur Beurteilung der aktuellen Bewegung (als gefährlich oder nicht gefährlich) verwendet, praktisch das gleiche. Wenn nämlich ein in Fahrtrichtung vorne liegender Absturzsensor einen erhöhten Abstand anzeigt, wird eine Gefahrensituation erkannt und die aktuelle Bewegung als gefährlich beurteilt; das Sicherheitsmodul verwirft die von der Navigationseinheit 140 geplante Vorwärtsbewegung und stoppt die aktuelle Bewegung. Bei der Detektion bestimmter Gefahrensituationen (z.B. wenn ein drohender Sturz über eine Kante erkannt wird) kann das Sicherheitsmodul die aktuelle Bewegung des Roboters also sofort stoppen (weil praktisch jegliche Fortsetzung der aktuellen Bewegung als unangemessen/gefährlich einzustufen ist).

Zur Bewertung der von der Navigationseinheit 140 gesendeten Bewegungsinformation können die von den Steuersensoren 120 ausgesendete Informationen ausgewertet werden. Beispielsweise können die Informationen der Steuersensoren 120 den internen Zustand (Statussensoren 124) und/oder die Umgebung (Sicherheitssensoren 122) des Roboters 100 betreffen. Die Informationen können daher beispielsweise Informationen zu der Umgebung des Roboters 100, z.B. die Position von Absturzkanten, Schwellen oder Hindernissen oder einer Bewegung von Hindernissen (z.B. Personen) aufweisen. Die empfangenen Informationen über die Umgebung des Roboters 100 können vom Sicherheitsmodul 150 mit Informationen über eine aktuelle Bewegung (Bewegungssensor 123) oder geplante Bewegungen (Vorhersagemodul 153) des Roboters 100 verknüpft werden. Informationen können dabei entweder direkt nach dem Empfang im Sicherheitsmodul 151 verarbeitet werden, und/oder dort zunächst für einen vorgebbaren Zeitraum oder eine vorgebbare Distanz (zurückgelegte Wegstrecke des Roboters 100) gespeichert werden, bevor sie verarbeitet und/oder berücksichtigt werden.

Zusätzlich können die empfangenen Informationen auch Kartendaten der Umgebung des Roboters 100 betreffen, die beispielsweise von der Navigationseinheit 140 erstellt und verwaltet werden. In den Kartendaten können beispielsweise Informationen über Absturzkanten oder andere Hindernisse enthalten sein. Der Roboter 100 "weiß" bei normalem Betrieb, wo auf der Karte er sich zum aktuellen Zeitpunkt befindet.

Anhand der empfangenen Informationen kann das Sicherheitsmodul 150 prüfen, ob eine Gefahrensituation vorliegt. Eine Gefahrensituation liegt beispielsweise dann vor, wenn sich eine Absturzkante, für den Roboter 100 ungünstiges Gelände (z.B. feuchter, glatter, stark geneigter oder unebener Untergrund) oder ein Hindernis in unmittelbarer Umgebung des Roboters 100 befindet oder sich auf diese(s) zubewegt (z.B. Personen). Wird keine Gefahrensituation erkannt, passiert nichts, und das Sicherheitsmodul 151 gibt die Bewegungsinformation an die Motorsteuerung 152 unverändert weiter.

Erkennt das Sicherheitsmodul 151 eine Gefahrensituation, kann es zunächst das Steuermodul 140 darüber informieren. Beispielsweise kann eine Information über eine erkannte Absturzkante oder eine drohende Kollision an die Navigationseinheit 140 gesendet werden. Es ist jedoch nicht zwangsläufig erforderlich, die Navigationseinheit 140 über die erkannte Gefahrensituation zu informieren. Das Sicherheitsmodul 151 kann auch als "stiller Beobachter" agieren und die Gefahrensituation prüfen ohne die Navigationseinheit 140 darüber zu informieren. In diesem Fall würden nur die Sensorinformationen (z.B. Odometrieinformation mit Zeitspempel), wie zuvor beschrieben, übermittelt werden. Weiterhin kann das Sicherheitsmodul 151 prüfen, ob die Navigationseinheit 140 richtig auf die erkannte Gefahrensituation reagiert. Das heißt, das Sicherheitsmodul 151 kann prüfen, ob die Bewegungsinformation der Navigationseinheit 140 den Roboter 100 auf ein Hindernis (oder eine Absturzkante, etc.) zusteuert (und damit die Gefahrensituation verschlimmert), oder den Roboter 100 von der Gefahrensituation weggelenkt, abgebremst oder angehalten wird. Hierfür kann das Sicherheitsmodul 151 zunächst abhängig von der erkannten Gefahrensituation bestimmen, welche Bewegungen grundsätzlich zu einem Unfall des Roboters 100 führen können. Eine Bewegung die mit hoher Wahrscheinlichkeit zu einem Unfall führen kann, kann beispielsweise als "gefährliche Bewegung" eingestuft werden, wohingegen Bewegungen, welche mit hoher Wahrscheinlichkeit nicht zu einem Unfall führen, als "sichere Bewegungen" eingestuft werden können. Eine gefährliche Bewegung ist beispielsweise eine Bewegung, bei der sich der Roboter 100 direkt auf eine Absturzkante oder ein Hindernis zubewegt (oder sich nicht von ihr/ihm entfernt). Auch Bewegungen, bei welchen der Roboter 100 ein Hindernis streifen würde und dadurch zum Schwanken, Fallen oder Kippen gebracht werden könnte oder das Hindernis durch die Berührung beschädigen könnte, können als gefährlich eingestuft werden.

Nach dem Einstufen der Bewegungen als sicher oder gefährlich kann das Sicherheitsmodul 151 dann prüfen, ob die aktuelle Bewegung des Roboters 100 eine gefährliche Bewegung oder eine sichere Bewegung darstellt. Das Sicherheitsmodul 150 kann dabei beispielsweise prüfen, ob sich der Roboter 100 weiterhin auf die Gefahrensituation zubewegt, oder ob er möglicherweise an dem Hindernis vorbei fahren wird, oder die Richtung wechselt und von der Gefahrensituation weg steuert. Hierfür kann das Sicherheitsmodul 151 beispielsweise die Vorhersage des Vorhersagemoduls 153, die Odometrieinformation (Bewegungssensor 123) und/oder die Bewegungsinformation, die von der Navigationseinheit 140 gesendet werden, nutzen und analysieren. Wenn das Sicherheitsmodul erkennt, dass der Roboter 100 eine als gefährlich eingestufte Bewegung ausführt, kann es Gegenmaßnahmen (Sicherheitsmaßnahmen) einleiten, welche die Sicherheit des Roboters 100 sowie umstehender Gegenstände gewährleisten, den Unfall also vermeiden oder zumindest abschwächen sollen. Gegenmaßnahmen können beispielsweise das Verwerfen oder Ändern der Bewegungsinformation der Navigationseinheit 140 sein. Steuersignale des Sicherheitsmoduls 150 können beispielsweise Richtungs- und/oder Geschwindigkeits-Kommandos aufweisen, welche den Roboter 100 beispielsweise dazu veranlassen, seine Richtung und/oder seine Geschwindigkeit zu ändern. Unfälle können beispielsweise bereits durch eine Verringerung der Geschwindigkeit vermieden werden, wenn ein bewegliches Objekt den vorgesehenen Weg des Roboters kreuzt. In vielen Fällen kann es beispielsweise ausreichend sein, wenn der Roboter 100 seine Richtung nur geringfügig oder auch stärker verändert, ohne dass die Geschwindigkeit verändert wird. Ebenso ist es denkbar, dass der Roboter 100 in die komplett entgegengesetzte Richtung fährt, also beispielsweise eine 180°-Drehung ausführt oder rückwärts fährt. Meist kann durch ein Anhalten (Nothalt) des Roboters 100 ein Unfall zuverlässig vermieden werden.

Wenn das Sicherheitsmodul 151 die Bewegungsinformationen der Navigationseinheit verwirft oder abändert, ist wie erwähnt es (optional) möglich, dass das Sicherheitsmodul 151 die Steuereinheit 140 über die Gegenmaßnahmen informiert. Die Navigationseinheit 140 kann den Empfang dieser Information bestätigen. Eine Bestätigung kann beispielsweise dadurch erfolgen, dass die Navigationseinheit 140 geänderte Bewegungsinformationen aussendet, welche an die erkannte Gefahrensituation angepasst sind. Es ist jedoch auch möglich, dass die Navigationseinheit 140 eine Bestätigung direkt an das Sicherheitsmodul 151 aussendet.

Wenn nach einer vorgegebenen Zeit (z.B. 1 Sekunde) keine oder keine gültige Rückmeldung der Navigationseinheit 140 erfolgt, kann das Sicherheitsmodul 151 beispielsweise davon ausgehen, dass ein sicherer Betrieb des Roboters 100 nicht mehr gewährleistet werden kann. In diesem Fall kann der Roboter 100 optional dauerhaft angehalten werden. Ein Neustart kann beispielsweise erst dann wieder möglich sein, wenn dieser durch einen Nutzer aktiv freigegeben wird oder der Roboter 100 durch den Nutzer oder einen Techniker gewartet wurde (z.B. Reinigung von Sensoren).

Gemäß einer Ausführungsform der Erfindung kann die Navigationseinheit 140 eine Anfrage an das Sicherheitsmodul 151 senden, mit der bewirkt wird, dass eine vom Sicherheitsmodul 151 als gefährlich eingestufte Bewegung dennoch ausgeführt werden kann, um einen weiteren Betrieb des Roboters 100 zu ermöglichen. Die Anfrage kann gestellt werden, nachdem die Navigationseinheit 140 von dem Sicherheitsmodul 151 über Gegenmaßnahmen zu einer gefährlichen Bewegung informiert wurde. Alternativ oder zusätzlich kann die Anfrage vorsorglich gestellt werden, so dass das Sicherheitsmodul 151 vorab über die geplante Bewegung informiert ist. Hierdurch kann beispielsweise eine Unterbrechung der geplanten Bewegung vermieden werden. Das Sicherheitsmodul 151 kann diese Anfrage prüfen und der Navigationseinheit 140 wiederum mitteilen, ob die angefragte Bewegung zugelassen wird.

Die Sensoren des Roboters (insbesondere Sicherheitssensoren 122) sind bei vielen Robotern nur auf eine Vorwärtsfahrt des Roboters 100 ausgelegt, d.h., Messrichtung in gewöhnlicher Fahrtrichtung, also im Bereich vor dem Roboter 100. Das heißt, sie können keine oder nur sehr eingeschränkte Informationen über den Bereich hinter dem Roboter 100 zur Verfügung stellen. Rückwärtsfahrten des Roboters 100 können daher beispielsweise nur über sehr kurze Strecken als sicher eingestuft werden, z.B. Rückwärtsfahrten über eine Strecke von weniger als 5cm oder weniger als 10cm. Längere Rückwärtsfahrten können daher beispielsweise durch das Sicherheitsmodul 151 nicht zugelassen werden. Beim Anfahren einer Basisstation oder beim Verlassen einer Basisstation, an welcher der Roboter 100 seine Energieversorgung aufladen kann, können jedoch beispielsweise längere Rückwärtsfahrten erforderlich sein. In der Regel kann das Sicherheitsmodul 151 hier davon ausgehen, dass die Basisstation vom Nutzer ordnungsgemäß derart aufgestellt wurde, dass ein sicheres Anfahren und Verlassen der Basisstation möglich ist. Muss der Roboter 100 nun die Basisstation verlassen oder anfahren, und ist hierfür eine längere Rückwärtsfahrt erforderlich, kann die Navigationseinheit 140 eine entsprechende Anfrage an das Sicherheitsmodul 151 senden. Das Sicherheitsmodul 151 kann dann beispielsweise prüfen, ob der Roboter 100 tatsächlich an der Basisstation steht. Beispielsweise kann hierzu geprüft werden, ob an den entsprechenden Ladekontakten des Roboters 100 eine Spannung anliegt. Die Ladekontakte bilden in diesem Fall eine Art Statussensor 124, der detektieren kann, ob der Roboter an die Ladestation angedockt hat. Eine andere Möglichkeit besteht beispielsweise darin, dass beim Andocken an die Basisstation ein Kontaktschalter geschlossen wird. Das Sicherheitsmodul 151 kann somit prüfen, ob der Kontaktschalter geschlossen ist. Dies sind jedoch lediglich Beispiele. Es kann auf jede andere geeignete Art und Weise geprüft werden, ob der Roboter 100 sich an einer Basisstation befindet. Wenn das Sicherheitsmodul 151 detektiert, dass der Roboter 100 an einer Basisstation steht, kann es die zum Verlassen der Basisstation benötigte Strecke zum Rückwärtsfahren freigeben, obwohl die benötigte Strecke die normal zulässige Strecke einer Rückwärtsfahrt übersteigt. Detektiert das Sicherheitsmodul 151 jedoch, dass der Roboter 100 nicht an einer Basisstation steht, kann lediglich die normal zulässige Strecke einer Rückwärtsfahrt freigegeben werden. Dies ist jedoch lediglich ein Beispiel. Es sind verschiedene andere Situationen denkbar, in welchen das Sicherheitsmodul 151 eine als gefährlich eingestufte Bewegung ausnahmsweise als sicher ansieht und diese freigibt.

Gemäß einer weiteren Ausführungsform der Erfindung ist die Steuereinheit 150und insbesondere das Sicherheitsmodul 151 dazu ausgebildet, einen Selbsttest durchzuführen. Dabei kann der Selbsttest beispielsweise einen Lese- und Schreibtest des zum Sicherheitsmodul 151 gehörigen Speichermoduls aufweisen. Schlägt ein solcher Selbsttest fehl, kann der Roboter 100 dauerhaft angehalten und ausgeschaltet werden, bis der Betrieb des Roboters 100 durch einen Nutzer wieder freigegeben wird. Nach dem Fehlschlagen eines Selbsttests kann in der Regel ein sicherer Betrieb des Roboters 100 nicht gewährleistet werden. Ein Selbsttest kann beispielsweise auch durch eine redundante Auslegung verschiedener Komponenten erreicht werden. So können beispielsweise der Prozessor und/oder das Speichermodul des Sicherheitsmoduls 151 zweifach vorhanden sein, wobei auf beiden vorhandenen Prozessoren eine Gefahrerkennungssoftware abgearbeitet werden kann. Solange das Ergebnis beider Prozessoren identisch ist oder lediglich geringe tolerierbare Abweichungen aufweist, kann davon ausgegangen werden, dass das Sicherheitsmodul 151 ordnungsgemäß funktioniert.

Gemäß einer weiteren Ausführungsform der Erfindung kann das Sicherheitsmodul 151 dazu ausgebildet sein, den zuverlässigen Betrieb der Steuersensoren 120 zu überwachen. Dabei kann es ausreichend sein, nur diejenigen Sensoren zu überwachen, welche sicherheitsrelevante Informationen liefern. Durch diese Überwachung der Sensoren kann erkannt werden, ob ein Sensor beispielsweise durch einen Defekt oder eine Verschmutzung falsche oder unzuverlässige Daten liefert. Dabei können die zu überwachenden Sensoren dazu ausgebildet sein, selbstständig Funktionsstörungen zu erkennen und diese an das Sicherheitsmodul 151 zu melden. Alternativ oder zusätzlich können die Sensoren dazu ausgebildet sein, nur dann sinnvolle Messdaten zu liefern, solange der Sensor voll funktionsfähig ist. So kann beispielsweise ein Bodenabstandssensor als nicht funktionsfähig erkannt werden, wenn er dauerhaft einen Abstand zum Untergrund von Null (oder Unendlich) liefert, anstatt eines für den Abstand vom Sensor zum Boden typischen Wert. Alternativ oder zusätzlich kann das Sicherheitsmodul 151 die von den Sensoren empfangenen Daten auch auf Konsistenz prüfen. Beispielsweise kann das Sicherheitsmodul 151 prüfen, ob die Sensordaten, welche zur Bestimmung der Bewegung des Roboters 100 verwendet werden (Bewegungssensor 123, insbesondere Radencoder), mit der gemessenen Leistungsaufnahme (Statussensor 124, Strom- und Spannungsmesser) der Antriebseinheit konsistent sind. Wird eines oder werden mehrere fehlerhafte Sensorsignale erkannt, kann der Roboter dauerhaft angehalten und ausgeschaltet werden, bis der Nutzer den Betrieb wieder freigibt, da sonst ein sicherer Betrieb des Roboters 100 nicht gewährleistet werden kann.

Grundsätzlich können mit dem beschriebenen Verfahren j egliche bekannten Gefahrensituationen erkannt werden. Die bekannten Gefahrensituationen können dabei in Testsituationen gezielt nachgestellt werden, um die Sicherheit des Roboters 100 zu überprüfen. Bei einem solchen Test kann der Roboter 100 beispielsweise gezielt in eine potentielle Gefahrensituation gebracht werden (z.B. Positionieren des Roboters nahe einer Absturzkante). Es kann dann ein Fall simuliert werden, in welchem die Navigationseinheit 140 falsche und/oder zufällige Bewegungsinformationen an die Steuereinheit 150 sendet. Anschließend kann beobachtet werden, ob das Sicherheitsmodul 151 zuverlässig einen Unfall verhindern kann. Hierzu kann die Navigationseinheit 140 einen spezialisierten Testbetrieb ermöglichen, wobei vordefinierte Bewegungsmuster erzeugt werden und/oder die Bewegungsinformation über die Kommunikationseinheit 130 vorgebbar sind (z.B. Fernsteuerung).

Fig. 4 illustriert beispielhaft eine Draufsicht auf eine Unterseite eines autonomen mobilen Roboters 100. Figur 4 zeigt dabei beispielhaft einen Reinigungsroboter, wobei das Reinigungsmodul des Roboters der Übersichtlichkeit halber nicht dargestellt ist. Der dargestellte Roboter 100 weist zwei zum Antriebsmodul 170 gehörige Antriebsräder 171 (Differentialantrieb) und ein Frontrad 172 auf. Das Frontrad 172 kann beispielsweise ein passives Rad sein, welches selber keinen Antrieb besitzt und sich lediglich aufgrund der Bewegung des Roboters 100 über den Boden mitbewegt. Das Frontrad 172 kann dabei um eine Achse, welche im Wesentlichen senkrecht zum Boden steht, um 360° drehbar sein (die Drehrichtung ist in Figur 4 durch einen gestrichelten Pfeil angedeutet). Die Antriebsräder 171 können jeweils mit einem elektrischen Antrieb (z.B. Elektromotor) verbunden sein. Durch die Drehung der Antriebsräder 171 bewegt sich der Roboter 100 vorwärts. Der Roboter 100 weist weiterhin Bodenabstandssensoren 121 (als Teil der Sicherheitssensoren 122) auf. In dem in Figur 4 dargestellten Beispiel weist der Roboter 100 drei Bodenabstandssensoren 121R, 121M, 121L auf. Ein erster Bodenabstandssensor 121R befindet sich beispielsweise auf der rechten Seite des Roboters 100 (in Fahrtrichtung gesehen). Dabei muss der erste Bodenabstandssensor 121R nicht auf der Mittelachse x angeordnet sein, welche den Roboter 100 gleichmäßig in einen vorderen Teil und einen hinteren Teil teilt. Der erste Bodenabstandssensor 121R kann beispielsweise leicht von der Mittelachse x aus gesehen nach vorne angeordnet sein. Ein zweiter Bodenabstandssensor 121L befindet sich beispielsweise auf der linken Seite des Roboters 100 (in Fahrtrichtung gesehen). Dabei muss der zweite Bodenabstandssensor 121L ebenfalls nicht auf der Mittelachse x angeordnet sein. Der zweite Bodenabstandssensor 121L kann ebenso leicht von der Mittelachse x aus gesehen nach vorne angeordnet sein. Ein dritter Bodenabstandssensor 121M kann beispielsweise mittig vorne am Roboter 100 angeordnet sein. Beispielsweise ist vor jedem Rad zumindest ein Bodenabstandssensor 121 so angeordnet, dass bei einer Vorwärtsfahrt eine Absturzkante detektiert wird, bevor das Rad über diese fährt.

Die Bodenabstandssensoren 121 sind dazu ausgebildet, den Abstand des Roboters 100 zum Untergrund zu detektieren, oder zumindest dazu ausgebildet, zu detektieren, ob in einem bestimmten Abstandsintervall eine Bodenfläche vorhanden ist. Während des normalen Betriebs des Roboters 100 liefern die Bodenabstandssensoren 121 in der Regel verhältnismäßig gleichmäßige Werte, da sich der Abstand der Bodenabstandssensoren 121 und somit des Roboters 100 zum Untergrund nur wenig verändert. Insbesondere bei glatten Böden bleibt der Abstand zum Untergrund meist weitgehend gleich. Geringfügige Abweichungen der Werte können sich beispielsweise auf Teppichen ergeben, auf welchen die Antriebsräder 171 und das Frontrad 172 einsinken können. Dadurch kann sich der Abstand des Roboterkörpers mit den Bodenabstandssensoren 121 zum Untergrund verringern. Absturzkanten, wie beispielsweise Treppenstufen, können beispielsweise erkannt werden, wenn sich die von wenigstens einem der Bodenabstandssensoren 121 gelieferten Werte plötzlich stark erhöhen. Beispielsweise kann eine Absturzkante erkannt werden, wenn sich der von wenigstens einem Bodenabstandssensor 121 gemessene Wert um mehr als einen vorgegebenen Grenzwert erhöht. Die Bodenabstandssensoren 121 können beispielsweise einen Sender für ein optisches oder akustisches Signal sowie einen Empfänger aufweisen, der dazu ausgebildet ist die Reflexion des ausgesandten Signales zu detektieren. Mögliche Messverfahren weisen das Messen der Intensität des vom Boden reflektierten Signals, Triangulation oder das Messen der Laufzeit des ausgesendeten Signals und dessen Reflexion auf. Gemäß einer Ausführungsform der Erfindung bestimmt ein Bodenabstandssensor 121 beispielsweise nicht den genauen Abstand des Sensors zum Untergrund, sondern liefert lediglich ein boolesches Signal, das anzeigt, ob der Untergrund innerhalb eines vorgegebenen Abstands detektiert wird (z.B. Untergrund detektiert in einem Abstand von z.B. maximal 5cm zum Sensor 121). Die konkrete Auswertung und Interpretation der Sensorsignale kann in der Steuereinheit 150 erfolgen.

Typische von einem autonomen mobilen Roboter ausgeführte Bewegungen (bzw. die von der Navigationseinheit 140 geplanten Bewegungen, welche in Form von Bewegungsinformationen an die Steuereinheit 140 gesandt wird) weisen eine Vorwärtsbewegung, eine Drehbewegung nach rechts oder links und Kombinationen aus diesen Bewegungen auf. Wenn sich der Roboter 100 beim Ausführen einer solchen Bewegung auf eine Absturzkante zubewegt, wird diese zumindest von einem der Bodenabstandssensoren 121 detektiert. Aus einfachen geometrischen Überlegungen lassen sich dadurch diejenigen Bewegungen ermitteln, welche zu einem Unfall (in diesem Fall Absturz) des Roboters 100 führen können. Löst beispielsweise der erste oder der zweite Bodenabstandssensor 121R, 121L aus, welche seitlich am Roboter 100 angeordnet sind, dann darf sich der Roboter 100 danach nur noch maximal um eine erste Strecke L1 vorwärts bewegen, wobei die erste Strecke L1 dem Abstand zwischen dem entsprechenden Antriebsrad 171 (Radauflagepunkt) und dem Bodenabstandssensor 121R, 121L entspricht. Löst beispielsweise der dritte Bodenabstandssensor 121M aus, welcher sich vorne am Roboter 100 befindet, dann darf sich der Roboter 100 danach nur noch maximal um eine zweite Strecke L2 vorwärts bewegen, wobei die zweite Strecke dem Abstand zwischen dem Frontrad 172 (Radauflagepunkt) und dem dritten Bodenabstandssensor 121M entspricht. Der Roboter 100 muss somit in der Lage sein, aus voller Fahrt heraus eine Absturzkante zu detektieren, ein Steuersignal zum Abbremsen zu erzeugen, und noch vor der Absturzkante (also innerhalb der ersten bzw. zweiten Strecke L1, L2) zum Stehen zu kommen. Hierbei sollten insbesondere die Reaktionszeiten der einzelnen benötigten Komponenten, also z.B. des relevanten Sicherheitssensors 122, der Navigationseinheit 140, der Steuereinheit mit dem Sicherheitsmodul 151 und der Motorsteuerung und der Antriebseinheit 170, sowie auch die Geschwindigkeit des Roboters 100, die mögliche (negative) Beschleunigung zum Abbremsen des Roboters 100 (Trägheit) und der hiermit verbundene Bremsweg berücksichtigt werden. Beispielsweise kann das Sicherheitsmodul 150 dazu ausgebildet sein, nur eine Rückwärtsbewegung des Roboters 100 zuzulassen, solange wenigstens einer der Bodenabstandssensoren 121 ausgelöst ist. Ein Bodenabstandssensor löst aus, wenn detektiert wird, dass der Bodenabstand größer ist als ein zulässiger Maximalwert.

In dem in Figur 4 dargestellten Beispiel ist die zweite Strecke L2 kürzer als die ersten Strecken L1. Um nach einem Auslösen des dritten Bodenabstandssensors 121M trotzdem sichergehen zu können, dass der Roboter 100 noch rechtzeitig vor einer Absturzkante angehalten wird, kann das Sicherheitsmodul 151 beispielsweise dazu ausgebildet sein, alle Bewegungsinformationen der Navigationseinheit 140 zu verwerfen und die Motorsteuerung dazu zu veranlassen ein Steuersignal zum sofortigen Stoppen des Roboters 100 auszugeben, sobald der dritte Bodenabstandssensor 121M auslöst. Das Sicherheitsmodul 151 kann beispielsweise nicht erst das korrekte Verhalten der Navigationseinheit 140 prüfen, da dies zu viel Zeit in Anspruch nehmen könnte. Erst nach dem Anhalten des Roboters 100 kann das Sicherheitsmodul 151 dann beispielsweise prüfen, ob die Navigationseinheit 140 ebenfalls der erkannten Situation angemessene Bewegungsinformationen aussendet. Angemessene Bewegungsinformationen in einer solchen Situation können beispielsweise Kommandos zum Anhalten des Roboters, zum Rückwärtsfahren oder zum Durchführen einer Drehung von der Absturzkante weg aufweisen. Solche Bewegungsinformationen würden vom Sicherheitsmodul 151 unbeanstandet an die Motorsteuerung weitergebeben werden. Erkennt das Sicherheitsmodul 151 jedoch, dass Bewegungsinformationen zum Durchführen einer gefährlichen Bewegung (z.B. vorwärtsfahren) von der Navigationseinheit erzeugt werden, so kann es die Kontrolle über den Roboter behalten, bzw. übernehmen indem diese Bewegungsinformationen verworfen werden.

Beim Auslösen des ersten oder des zweiten Bodenabstandssensors 121R, 121L kann es beispielsweise ausreichend sein, eine Reaktion der Navigationseinheit 140 auf die Gefahrensituation hin abzuwarten, da mehr Zeit zur Verfügung steht, bis der Roboter 100 zum Stillstand kommen muss, um einen Unfall abzuwenden. Das Sicherheitsmodul 151 kann in einem solchen Fall beispielsweise abwarten, bis der Roboter 100 eine dritte Strecke L3 zurückgelegt hat (z.B. mit L3 = L1 - L2). Zu diesem Zeitpunkt hat der Roboter 100 dann nur noch die für die zweite Strecke L2 benötigte Zeit zur Verfügung, um einen Unfall zu vermeiden. Während der für die dritte Strecke L3 benötigten Zeit kann das Sicherheitsmodul 151 die Navigationseinheit 140 somit noch gewähren lassen, ohne dessen Bewegungsinformationen zu verwerfen und/oder den Roboter 100 anzuhalten. Reagiert die Navigationseinheit 140 während dieser Zeit angemessen (Bewegungsinformation, die den Roboter 100 weg von der detektierten Absturzkante führt), ist ein Einschreiten des Sicherheitsmoduls 151 nicht erforderlich, und es bleibt passiv (weiterreichen der unveränderten Bewegungsinformation). Ob die dritte Strecke L3 bereits zurückgelegt wurde, kann beispielsweise auf Basis der möglichen Maximalgeschwindigkeit des Roboters 100 mit Hilfe der vergangenen Zeit und/oder mit Hilfe von Odometern bestimmt werden. Das Sicherheitsmodul 151 kann den Roboter 100 beispielsweise anhalten, wenn die Navigationseinheit 140 nicht innerhalb von 10ms nach der Detektion einer Absturzkante durch den ersten oder zweiten Bodenabstandssensor 121R, 121L den Roboter 100 anhält und/oder von der Absturzkante weg steuert. Beim Bestimmen der Strecke L3 und wann diese Zurückgelegt wurde, kann die Vorhersage der Bewegung des Vorhersagemoduls 153 genutzt werden.

Aus Kostengründen weisen Roboter 100 häufig nur, wie in Figur 4 dargestellt, Bodenabstandssensoren 121 im vorderen Bereich des Roboters 100 auf, so dass Absturzkanten nur bei einer Vorwärtsfahrt des Roboters 100 erkannt werden können. Da sich der Roboter 100 überwiegend in Vorwärtsrichtung fortbewegt, ist dies in der Regel ausreichend, um einen sicheren Betrieb des Roboters 100 im Hinblick auf Absturzkanten zu gewährleisten. In manchen Situationen kann eine Bewegung in Vorwärtsrichtung jedoch durch Hindernisse oder Absturzkanten blockiert sein. In solchen Situationen kann es unvermeidlich sein, dass der Roboter 100 als Ganzes oder zumindest mit einem seiner Antriebsräder 171 rückwärts fährt, um sich aus dieser Situation zu befreien. Der Roboter 100 kann dabei jedoch lediglich so weit sicher rückwärts fahren, wie er seinen Weg in dieser Richtung kennt. Kennt er den Weg nicht, besteht aufgrund der im hinteren Teil des Roboters 100 fehlenden Bodenabstandssensoren die Gefahr eines Unfalls, da er beispielsweise hinter sich liegende Absturzkanten nicht erkennen kann. Die zuletzt vom Roboter 100 zurückgelegte Strecke kann beispielsweise als Gerade approximiert werden. Eine Rückwärtsfahrt kann beispielsweise für eine vierte Strecke D als sicher erkannt werden, wobei D der Abstand zwischen den Antriebsrädern 171 und dem Umkreis S ist, auf welchem die Bodenabstandssensoren 121 im vorderen Bereich des Roboters 100 angeordnet sind. Wenn sich der Roboter zuletzt um weniger als die vierte Strecke D vorwärts bewegt hat, darf er sich um eine Strecke zurück bewegen, welche nicht größer ist als die zuletzt in Vorwärtsrichtung zurückgelegte Strecke. Bei kombinierten Vorwärts- und Rückwärtsbewegungen kann die tatsächlich zurückgelegte Strecke (z.B. mit dem Bewegungssensor 123) ermittelt und für eine evtl. notwendige Rückwärtsfahrt berücksichtigt werden.

Das Sicherheitsmodul 151 kann beispielsweise dazu ausgebildet sein, direkt nach dem Einschalten des Roboters 100 keine Rückwärtsbewegung zuzulassen, da ihm möglicherweise keine Informationen über seine Umgebung vorliegen und ihm möglicherweise nicht bekannt ist, ob sich hinter ihm eine Absturzkante befindet. Beispielsweise könnte der Roboter 100 von einem Nutzer auf einem Tisch nahe der Tischkante, oder auf einer Treppenstufe oder Treppenabsatz abgestellt worden sein. Das Sicherheitsmodul 151 kann dabei eine Rückwärtsbewegung des Roboters 100 beispielsweise auch dann blockieren, wenn die Vorwärtsrichtung durch ein Hindernis oder eine Absturzkante blockiert ist. Wie bereits weiter oben beschrieben kann die Steuereinheit 140 beispielsweise eine entsprechende Anfrage an das Sicherheitsmodul 151 senden, wenn es den Roboter 100 rückwärts von einer Basisstation herunter steuern will. Wenn das Sicherheitsmodul 151 auf eine solche Anfrage verifiziert, dass sich der Roboter 100 tatsächlich an der Basisstation befindet, kann es die zum von der Basisstation Herunterfahren benötigte Strecke zum Rückwärtsfahren freigeben.

Die Bewegung des Roboters 100 kann mittels verschiedenster Sensoren, beispielsweise mittels Odometern (z.B. Radkodierer, *wheel encoder)* bestimmt und/oder basierend auf den Steuersignalen vom Vorhersagemodul 153 berechnet werden. Hierbei kann beispielsweise der vom Roboter 100 zurückgelegte Weg in einem vorbestimmten Zeitintervall und/oder Bewegungsintervall gespeichert werden. Zusätzlich kann beispielsweise auch die Position bzw. der Weg der Bodenabstandssensoren 121 gespeichert werden, um damit eine sichere Fläche besser abschätzen zu können.

Gemäß einer Ausführungsform der Erfindung kann der Umkreis S, auf welchem die Bodenabstandssensoren 121 angeordnet sind, als sicher befahrbare Fläche angesehen werden, wenn sich der Roboter 100 zuvor um eine Strecke, die zumindest größer als der Radius des Umkreises S ist, vorwärts bewegt hat. Das Sicherheitsmodul 151 kann in diesem Fall dazu ausgebildet sein, den Roboter 100 anzuhalten, wenn es (z.B. auf Basis der Steuerkommandos und/oder einer Odometermessung) detektiert, dass der Roboter 100 während einer Rückwärtsfahrt (und hiermit kombinierten kurzen Vorwärtsbewegungen) den Umkreis S durch eine rückwärts gerichtete Bewegung verlässt.

Um Kollisionen zu vermeiden, können mehrere Sensoren zur Detektion von Hindernissen gemeinsam genutzt werden. Beispielsweise umfassen die Sicherheitssensoren 122 optische Sensoren auf (z.B. Infrarot-Sensoren mit ähnlichem Messprinzip wie die Bodenabstandssensoren), welche dazu ausgebildet sind, Hindernisse kontaktlos im Nahbereich des Roboters zu erkennen. Die Sicherheitssensoren 122 können beispielsweise auch taktile Sensoren umfassen, welche dazu ausgebildet sind optisch schwer zu detektierende Hindernisse (z.B. Glastüren) bei einer Berührung zu erkennen. Ein taktiler Sensor kann beispielsweise einen Kontaktschalter aufweisen, welcher dazu ausgebildet ist zu schließen, wenn ein Hindernis berührt wird. Ein taktiler Sensor kann beispielsweise weiterhin einen Federweg aufweisen, welcher es dem Roboter 100 erlaubt abzubremsen, bevor der Hauptkörper des Roboters 100 gegen das Hindernis prallt. In einem solchen Fall verhält sich das Sicherheitsmodul 151 analog zu dem Verhalten beim Auslösen eines Bodenabstandssensors 121 bei Detektion einer Absturzkante.

Das Sicherheitsmodul 151 kann beispielsweise dazu ausgebildet sein, Hindernisse in der Nähe des Roboters zu überwachen. Wenn Hindernisse innerhalb eines vorgegebenen Abstands zum Roboter 100 detektiert werden, kann das Sicherheitsmodul 150 beispielsweise Bewegungen mit einer Geschwindigkeit oberhalb einer Grenzgeschwindigkeit verhindern. Der vorgegebene Abstand kann von der Richtung abhängig sein, in welcher das Hindernis detektiert wird. Beispielsweise ist ein hinter dem Roboter 100 detektiertes Hindernis in der Regel nicht einschränkend für eine Vorwärtsbewegung des Roboters 100. Die Grenzgeschwindigkeit kann vom Abstand zum Hindernis und/oder von der Richtung in welcher das Hindernis detektiert wird abhängig sein.

Das Sicherheitsmodul 151 kann auch dazu ausgebildet sein, wenn ein lebendes Objekt (Menschen, Haustiere) in der Umgebung des Roboters mittels geeignetem Sicherheitssensor 122 (z.B. Wärmebild) erkannt wird, Geschwindigkeiten und/oder Beschleunigungen, welche größer sind als ein vorgegebener Grenzwert, zu verhindern, unabhängig davon, ob, mit welcher Geschwindigkeit und in welche Richtung sich das Objekt bewegt. Durch eine Begrenzung der Maximalgeschwindigkeit erhöht sich beispielsweise die Zeit, welche dem Roboter 100 zur Verfügung steht, um auf unerwartete Bewegungen des Objektes zu reagieren. Gleichzeitig wird durch eine Begrenzung der Maximalgeschwindigkeit die Gefahr von Verletzungen von Personen oder Tieren und Schäden am Roboter oder Objekten reduziert, da die Verringerung der Geschwindigkeit zu einer Verringerung der kinetischen Energie des Roboters 100 führt. Durch eine Begrenzung der Beschleunigung des Roboters 100 können Personen in der Umgebung das Verhalten des Roboters 100 besser einschätzen und können besser auf die Bewegungen des Roboters reagieren, wodurch sich die Gefahr für Unfälle ebenfalls verringert.

Die Statussensoren 124 eines autonomen mobilen Roboters 100, beispielsweise eines Transportroboters, können beispielsweise Sensoren umfassen, die dazu ausgebildet sind, zu detektieren, ob und welche Gegenstände (z.B. Gläser oder Teller) der Roboter 100 transportiert. Anhand dieser Informationen können die Bewegungen des Roboters angepasst und eingeschränkt werden. Beispielsweise kann ein Roboter 100 schneller beschleunigen und sich mit größerer Geschwindigkeit fortbewegen, wenn er nichts transportiert. Transportiert er beispielsweise flache Gegenstände wie Teller, kann er in der Regel schneller beschleunigen als, wenn er Gläser oder Flaschen transportiert.

Das Sicherheitsmodul 151 kann weiterhin dazu ausgebildet sein, eine Funktion des Arbeitsmoduls 160 zu überwachen. Dies kann insbesondere dann vorteilhaft sein, wenn die Tätigkeit des Arbeitsmoduls 160 mit einer größeren Bewegung des Arbeitsmoduls 160 selbst und/oder einer Bewegung des Roboters 100 durch das Antriebsmodul 170 verbunden ist.

Das Arbeitsmodul 160 kann beispielsweise eine Bürste zum Sammeln von Schmutz aufweisen. Hierbei besteht grundsätzlich die Gefahr, dass die sich drehende Bürste beispielsweise Schnürsenkel von herumstehenden Schuhen, Teppichfransen oder Kabel von Elektrogeräten aufwickelt und dadurch blockiert wird. Die Drehung der Bürste kann beispielsweise mittels eines Drehzahl-Encoders gemessen werden. Eine blockierte Bürste kann dann detektiert werden, wenn keine Drehung der Bürste mehr detektiert werden kann. Es ist beispielsweise auch möglich, die elektrische Leistungsaufnahme des Bürstenmotors zu bestimmen und dadurch eine blockierte Bürste zu detektieren.

Es sind verschiedene Verfahren bekannt, um eine blockierte Bürste zu befreien. Beispielsweise kann die Bürste in einen Leerlauf schalten und den Roboter 100 eine Rückwärtsbewegung ausführen, bei welcher sich das Kabel, o.ä., wieder abwickelt. Dieses Vorgehen birgt jedoch Gefahren. Bewegungen des Roboters 100 bei blockierter Bürste können grundsätzlich zu Unfällen führen. Ist das auf der Bürste aufgewickelte Kabel beispielsweise das Kabel eines elektrischen Gerätes, besteht grundsätzlich die Gefahr, dass der Roboter das elektrische Gerät bei einer Rückwärtsfahrt mit sich zieht. Ist das elektrische Gerät auf einer erhöhten Position, beispielsweise in einem Regal angeordnet, kann dieses dadurch auf den Boden fallen und beschädigt werden. Das Sicherheitsmodul 151 kann daher beispielsweise dazu ausgebildet sein zu erkennen, ob die Bürste weiterhin blockiert, wenn ein Verfahren zum Befreien der Bürste durchgeführt wird. Die Bewegung des Roboters 100 kann in einem solchen Fall beispielsweise angehalten werden, da weder eine Vorwärts- noch eine Rückwärtsbewegung möglich ist, ohne Gegenstände zu beschädigen. Eine weitere Möglichkeit besteht darin, die Bürste in eine der normalen Bewegungsrichtung entgegengesetzten Richtung zu drehen, um das Kabel, o.ä., aus der Bürste zu befreien, ohne dass dabei der Roboter 100 seine Position verändert.

## Patentansprüche

1. Ein autonomer mobiler Roboter, der aufweist:
eine Antriebseinheit (170), welche dazu ausgebildet ist, Steuersignale zu empfangen und den Roboter nach Maßgabe der Steuersignale zu bewegen;
einen Navigationssensor (125) zum Erfassen von Informationen über die Umgebung des Roboters, mit denen sich der Roboter orientieren kann;
eine mit dem Navigationssensor (125) gekoppelte Navigationseinheit (140), die dazu ausgebildet ist, Informationen von dem Navigationssensor (125) zu empfangen und eine Bewegung für den Roboter zu planen;
eine Steuereinheit (150), die dazu ausgebildet ist, Bewegungsinformationen, welche die von der Navigationseinheit (140) geplante Bewegung repräsentieren, zu empfangen und basierend auf den Bewegungsinformationen die Steuersignale zu erzeugen,
weitere Sensoren (120), die mit der Steuereinheit (150) gekoppelt sind,
wobei die Steuereinheit (150) weitere Sensorinformationen von den weiteren Sensoren (120) empfängt, diese weiteren Sensorinformationen vorverarbeitet und die vorverarbeiteten Sensorinformationen in einem vordefinierten Format der Navigationseinheit (140) zur Verfügung stellt,
wobei die Planung der Bewegung für den Roboter durch die Navigationseinheit (140) auf den Informationen von dem Navigationssensor (125) und den von der Steuereinheit (150) zur Verfügung gestellten, vorverarbeiteten Sensorinformationen basiert,
**dadurch gekennzeichnet, dass** die Navigationseinheit (140) eine erste Recheneinheit aufweist, der ein erster Speicher oder Speicherbereich zugeordnet ist, und die Steuereinheit (150) eine zweite Recheneinheit aufweist, der ein zweiter Speicher oder Speicherbereich zugeordnet ist, und
wobei die erste Recheneinheit dazu ausgebildet ist, eine Navigationssoftware auszuführen, welche eine Karte einer Umgebung des Roboters verwendet.

2. Der autonome mobile Roboter gemäß Anspruch 1,
wobei das vordefinierte Format für die vorverarbeiteten Sensorinformationen unabhängig von der Implementierung der weiteren Sensoren (120) ist.

3. Der autonome mobile Roboter gemäß Anspruch 1 oder 2,
wobei beide, die Steuereinheit (150) und die Navigationseinheit (140), jeweils einen Taktgeber aufweisen, die synchronisiert sind, und
wobei das vordefinierte Format für die vorverarbeiteten Sensorinformationen einen den vorverarbeiteten Sensorinformationen zugeordneten Zeitstempel umfasst und/oder wobei die von der Navigationseinheit (140) bereit gestellten Bewegungsinformationen einen Zeitstempel umfassen, der eine geplanten Bewegung zugeordnet ist.

4. Der autonome mobile Roboter gemäß einem der Ansprüche 1 bis 3,
wobei beide, die Steuereinheit (150) und die Navigationseinheit (140), zumindest teilweise mittels Software implementiert sind, die in unterschiedlichen Prozessoren oder Prozessorkernen aufgeführt wird.

5. Der autonome mobile Roboter gemäß Anspruch 1,
wobei die Navigationssoftware, wenn sie auf der ersten Recheneinheit ausgeführt wird, bewirkt, dass die Navigationseinheit (140) basierend auf den von dem Navigationssensor (125) empfangenen Informationen eine Karte der Umgebung des Roboters erstellt und die Position und Orientierung des Roboters auf der Karte bestimmt.

6. Der autonome mobile Roboter gemäß einem der Ansprüche 1 bis 5,
wobei die Navigationseinheit (140) eine Schnittstelle zu einer Kommunikationseinheit (130) aufweist, die eine Kommunikation mit externen Geräten ermöglicht, insbesondere für das Bereitstellen von Karteninformation und Statusinformation des Roboters.

7. Der autonome mobile Roboter gemäß Anspruch 6,
wobei die Navigationseinheit (140) dazu ausgebildet ist, die Planung der Bewegung für den Roboter abhängig von Kommandos durchzuführen, die über die Kommunikationseinheit (130) empfangen wurden.

8. Der autonome mobile Roboter gemäß einem der Ansprüche 1 bis 7,
wobei die weiteren Sensoren (120) einen Sicherheitssensor (122) umfassen, welche Informationen über die unmittelbare Umgebung des Roboters erfassen, und/oder
wobei die weiteren Sensoren (120) einen Bewegungssensor (123) umfassen, welche Informationen über eine aktuelle Bewegung des Roboters erfassen, und/oder
wobei die weiteren Sensoren (120) einen Statussensor (124) umfassen, welche Informationen über den Zustand des Roboters erfassen.

9. Der autonome mobile Roboter gemäß Anspruch 8,
wobei die weiteren Sensoren (120) einen Bewegungssensor (123) umfassen, welche Informationen über eine aktuelle Bewegung des Roboters erfassen,
wobei der Bewegungssensor (123) ein Odometriesensor ist und wobei
die vorverarbeiteten Sensordaten Informationen beinhalten, die vom Odometriesensor gelieferte Sensorsignale abhängen.

10. Der autonome mobile Roboter gemäß einem der Ansprüche 1 bis 9,
wobei die Steuereinheit (150) ein Sicherheitsmodul (151) beinhaltet, welches dazu ausgebildet ist, die von der Navigationseinheit (140) empfangenen Bewegungsinformationen zu prüfen, um unter Berücksichtigung der weitere Sensorinformationen festzustellen, ob die geplante Bewegung eine Gefahrensituation herbeiführen wird oder herbeiführen könnte.

11. Ein Verfahren für einen autonomen mobilen Roboter, das aufweist:
Planen einer Bewegung für den Roboter in einer Navigationseinheit des Roboters (140) basierend auf Informationen, die von einem Navigationssensor geliefert werden, der Informationen über die Umgebung des Roboters erfasst, mit denen sich der Roboter orientieren kann;
Übertragen von Bewegungsinformationen, welche die von der Navigationseinheit (140) geplante Bewegung repräsentieren, zu einer Steuereinheit (150) des Roboters;
Erzeugen von Steuersignalen für eine Antriebseinheit (170) des Roboters basierend auf den übertragenen Bewegungsinformationen in der Steuereinheit (150);
Empfangen von weiteren Sensorinformationen von weiteren Sensoren (120), Vorverarbeiten dieser weiteren Sensorinformationen durch die Steuereinheit (150) und Bereitstellen der vorverarbeiteten Sensorinformationen in einem vordefinierten Format;
Übertragen der vorverarbeiteten Sensorinformationen in dem vordefinierten Format an die Navigationseinheit (150),
wobei die Planung der Bewegung für den Roboter durch die Navigationseinheit (140) auf den Informationen von dem Navigationssensor (125) und den von der Steuereinheit (150) zur Verfügung gestellten, vorverarbeiteten Sensorinformationen basiert,
**dadurch gekennzeichnet, dass** die Navigationseinheit (140) eine erste Recheneinheit aufweist, der ein erster Speicher oder Speicherbereich zugeordnet ist, und die Steuereinheit (150) eine zweite Recheneinheit aufweist, der ein zweiter Speicher oder Speicherbereich zugeordnet ist; und
Ausführen, durch die erste Recheneinheit, einer Navigationssoftware, welche eine Karte einer Umgebung des Roboters verwendet.

## Claims

1. An autonomous mobile robot, comprising:
a drive unit (170) which is designed to receive control signals and to move the robot in accordance with the control signals;
a navigation sensor (125) for capturing navigation features;
a navigation unit (140) coupled to the navigation sensor (125), which navigation unit is designed to receive information from the navigation sensor (125) and to plan a movement for the robot;
a control unit (150), which is designed to receive movement information representing the movement planned by the navigation unit (140) and to generate the control signals based on the movement information;
further sensors (120) which are coupled to the control unit (150),
wherein the control unit (150) receives further sensor information from the further sensors, pre-processes this further sensor information, and supplies the pre-processed sensor information in a pre-defined format to the navigation unit (140); and
wherein the planning of the movement for the robot by the navigation unit (140) is based both on the information from the navigation sensor (125) and on the pre-processed sensor information supplied by the control unit (150),
**characterized in that** the navigation unit (140) has a first computing unit, to which a first storage device or storage area is assigned, and the control unit (150) has a second computing unit, to which a second storage device or storage area is assigned,
wherein the first computing unit is designed to execute navigation software which uses a map of an environment of the robot.

2. The autonomous mobile robot according to claim 1,
wherein the pre-defined format for the pre-processed sensor information is independent of the implementation of the further sensors (120).

3. The autonomous mobile robot according to claim 1 or 2,
wherein both the control unit (150) and the navigation unit (140) each have a clock generator, with the clock generators being synchronized, and
wherein the pre-defined format for the pre-processed sensor information comprises a timestamp assigned to the pre-processed sensor information and/or wherein the movement information provided by the navigation unit (140) comprises a timestamp, which is assigned to a planned movement.

4. The autonomous mobile robot according to any of claims 1 to 3,
wherein both the control unit (150) and the navigation unit (140) are implemented, at least partially, by means of software, which is executed in different processors or processor cores.

5. The autonomous mobile robot according to claim 1,
wherein the navigation software, when it is executed on the first computing unit, causes the navigation unit (140) to create a map of the environment of the robot based on the information received from the navigation sensor (125) and determines the position and orientation of the robot on the map.

6. The autonomous mobile robot according to any of claims 1 to 5,
wherein the navigation unit (140) has an interface to a communication unit (130), which enables communication with external devices, particularly for providing map information and status information of the robot.

7. The autonomous mobile robot according to claim 6,
wherein the navigation unit (140) is designed to implement the planning of the movement for the robot depending on commands which have been received via the communication unit (130).

8. The autonomous mobile robot according to any of claims 1 to 7,
wherein the further sensors (120) comprise a safety sensor (122), which captures information regarding the direct environment of the robot, and/or
wherein the further sensors (120) comprise a movement sensor (123), which captures information regarding a current movement of the robot, and/or
wherein the further sensors (120) comprise a status sensor (124), which captures information regarding the status of the robot.

9. The autonomous mobile robot according to claim 8,
wherein the further sensors (120) comprise a movement sensor (123), which captures information regarding a current movement of the robot,
wherein the movement sensor (123) is an odometry sensor, and wherein
the pre-processed sensor data contains information which depends on the sensor signals supplied by the odometry sensor.

10. The autonomous mobile robot according to any of claims 1 to 9,
wherein the control unit (150) contains a safety module (151), which is designed to verify the movement information received by the navigation unit (140) in order to determine, while considering the further sensor information, whether the planned movement will or could cause a hazardous situation.

11. A method for an autonomous mobile robot, which comprises:
planning a movement for the robot in a navigation unit (140) of the robot based on information which is supplied by a navigation sensor, which captures navigation features;
transferring movement information representing the movement planned by the navigation unit (140) to a control unit (150) of the robot;
generating control signals for a drive unit (170) of the robot based on the transferred movement information in the control unit (150);
receiving further sensor information from further sensors (120), preprocessing this further sensor information by means of the control unit (150), and providing the pre-processed sensor information in a pre-defined format;
transferring the pre-processed sensor information in the pre-defined format to the navigation unit (150),
wherein the planning of the movement for the robot by the navigation unit (140) is based both on the information from the navigation sensor (125) and on the pre-processed sensor information supplied by the control unit (150),
**characterized in that** the navigation unit (140) has a first computing unit, to which a first storage device or storage area is assigned, and the control unit (150) has a second computing unit, to which a second storage device or storage area is assigned; and
executing, by the first computing unit, navigation software which uses a map of an environment of the robot.

## Revendications

1. Robot mobile autonome, comprenant :
une unité d'entraînement (170) qui est configurée pour recevoir des signaux de commande et pour déplacer le robot conformément aux signaux de commande ;
un capteur de navigation (125) pour détecter des caractéristiques de navigation ;
une unité de navigation (140) couplée au capteur de navigation (125), laquelle unité de navigation est configurée pour recevoir des informations du capteur de navigation (125) et pour planifier un mouvement pour le robot ;
une unité de commande (150) qui est configurée pour recevoir des informations de mouvement représentant le mouvement planifié par l'unité de navigation (140) et pour générer les signaux de commande sur la base des informations de mouvement ;
d'autres capteurs (120) qui sont couplés à l'unité de commande (150),
dans lequel l'unité de commande (150) reçoit d'autres informations de capteur des autres capteurs, prétraite ces autres informations de capteur et fournit les informations de capteur prétraitées dans un format prédéfini à l'unité de navigation (140) ; et
dans lequel la planification du mouvement pour le robot par l'unité de navigation (140) est basée à la fois sur les informations du capteur de navigation (125) et sur les informations de capteur prétraitées fournies par l'unité de commande (150),
**caractérisé en ce que** l'unité de navigation (140) présente une première unité de calcul à laquelle est associé un premier dispositif de stockage ou une première zone de stockage, et l'unité de commande (150) présente une deuxième unité de calcul à laquelle est associé un deuxième dispositif de stockage ou une deuxième zone de stockage,
dans lequel la première unité de calcul est configurée pour exécuter un logiciel de navigation qui utilise une carte d'un environnement du robot.

2. Robot mobile autonome selon la revendication 1,
dans lequel le format prédéfini pour les informations de capteur prétraitées est indépendant de la mise en œuvre des autres capteurs (120).

3. Robot mobile autonome selon la revendication 1 ou 2,
dans lequel à la fois l'unité de commande (150) et l'unité de navigation (140) présentent chacune un générateur d'horloge, les générateurs d'horloge étant synchronisés, et
dans lequel le format prédéfini pour les informations de capteur prétraitées comprend une estampille temporelle associée aux informations de capteur prétraitées et/ou dans lequel les informations de mouvement fournies par l'unité de navigation (140) comprennent une estampille temporelle qui est associée à un mouvement planifié.

4. Robot mobile autonome selon l'une quelconque des revendications 1 à 3,
dans lequel à la fois l'unité de commande (150) et l'unité de navigation (140) sont implémentées, au moins en partie, au moyen d'un logiciel qui est exécuté dans différents processeurs ou noyaux de processeur.

5. Robot mobile autonome selon la revendication 1,
dans lequel le logiciel de navigation, lorsqu'il est exécuté sur la première unité de calcul, amène l'unité de navigation (140) à créer une carte de l'environnement du robot sur la base des informations reçues du capteur de navigation (125) et détermine la position et l'orientation du robot sur la carte.

6. Robot mobile autonome selon l'une quelconque des revendications 1 à 5,
dans lequel l'unité de navigation (140) présente une interface avec une unité de communication (130), laquelle permet une communication avec des dispositifs externes, en particulier pour fournir des informations de carte et des informations d'état du robot.

7. Robot mobile autonome selon la revendication 6,
dans lequel l'unité de navigation (140) est configurée pour implémenter la planification du mouvement pour le robot en fonction d'instructions qui ont été reçues par l'intermédiaire de l'unité de communication (130).

8. Robot mobile autonome selon l'une quelconque des revendications 1 à 7,
dans lequel les autres capteurs (120) comprennent un capteur de sécurité (122) qui détecte des informations concernant l'environnement direct du robot, et/ou
dans lequel les autres capteurs (120) comprennent un capteur de mouvement (123) qui détecte des informations concernant un mouvement actuel du robot, et/ou
dans lequel les autres capteurs (120) comprennent un capteur d'état (124) qui détecte des informations concernant l'état du robot.

9. Robot mobile autonome selon la revendication 8,
dans lequel les autres capteurs (120) comprennent un capteur de mouvement (123) qui détecte des informations concernant un mouvement actuel du robot,
dans lequel le capteur de mouvement (123) est un capteur d'odométrie, et dans lequel
les données de capteur prétraitées contiennent des informations qui dépendent des signaux de capteur fournis par le capteur d'odométrie.

10. Robot mobile autonome selon l'une quelconque des revendications 1 à 9,
dans lequel l'unité de commande (150) contient un module de sécurité (151) qui est configuré pour vérifier les informations de mouvement reçues par l'unité de navigation (140) afin de déterminer, en tenant compte des autres informations de capteur, si le mouvement planifié va ou pourrait provoquer une situation dangereuse.

11. Procédé pour un robot mobile autonome, qui comprend :
la planification d'un mouvement pour le robot dans une unité de navigation (140) du robot sur la base d'informations qui sont fournies par un capteur de navigation qui détecte des caractéristiques de navigation ;
la transmission d'informations de mouvement représentant le mouvement planifié par l'unité de navigation (140) à une unité de commande (150) du robot ;
la génération de signaux de commande pour une unité d'entraînement (170) du robot sur la base des informations de mouvement transmises dans l'unité de commande (150) ;
la réception d'autres informations de capteur d'autres capteurs (120), le prétraitement de ces autres informations de capteur au moyen de l'unité de commande (150) et la fourniture des informations de capteur prétraitées dans un format prédéfini ;
la transmission des informations de capteur prétraitées dans le format prédéfini à l'unité de navigation (150),
dans lequel la planification du mouvement pour le robot par l'unité de navigation (140) est basée à la fois sur les informations du capteur de navigation (125) et sur les informations de capteur prétraitées fournies par l'unité de commande (150),
**caractérisé en ce que** l'unité de navigation (140) présente une première unité de calcul à laquelle est associé un premier dispositif de stockage ou une première zone de stockage, et l'unité de commande (150) présente une deuxième unité de calcul à laquelle est associé un deuxième dispositif de stockage ou une deuxième zone de stockage ; et
l'exécution, par la première unité de calcul, d'un logiciel de navigation qui utilise une carte d'un environnement du robot.
